# EUROPÄISCHE PATENTANMELDUNG

(11) **EP 3 581 605 A1**
(43) Veröffentlichungstag der Anmeldung: **18.12.2019**
(21) Anmeldenummer: 18177670.9
(22) Anmeldetag: 14.06.2018
(51) Int. Cl.: C08G 64/20, C08G 64/30

(54) **SCHMELZEUMESTERUNGSVERFAHREN ZUR GLEICHZEITIGEN HERSTELLUNG MINDESTENS ZWEIER VERSCHIEDENARTIGER POLYCARBONATE IN EINER PRODUKTIONSANLAGE**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft ein Schmelzeumesterungsverfahren zur kontinuierlichen gleichzeitigen Herstellung eines ersten Polycarbonats und mindestens eines zweiten Polycarbonats in ein und derselben Produktionsanlage aus ein und demselben Oligocarbonat. Dabei sind das erste Polycarbonat und das mindestens zweite Polycarbonat verschiedenartig. Die verschiedenartigen Polycarbonate können sich dabei beispielsweise hinsichtlich ihres Molekulargewichts, ihrer Lösungsviskosität, ihrem Verzweigungsgrad, der Art ihrer Monomereinheiten, der Verteilung ihrer Monomereinheiten in den Polymerketten, oder anderen Eigenschaften unterscheiden.

## Beschreibung

Die vorliegende Erfindung betrifft ein Schmelzeumesterungsverfahren zur kontinuierlichen gleichzeitigen Herstellung eines ersten Polycarbonats und mindestens eines zweiten Polycarbonats in ein und derselben Produktionsanlage aus ein und demselben Oligocarbonat. Dabei sind das erste Polycarbonat und das mindestens zweite Polycarbonat verschiedenartig.

Die verschiedenartigen Polycarbonate können sich dabei beispielsweise hinsichtlich ihres Molekulargewichts, ihrer Lösungsviskosität, ihrem Verzweigungsgrad, der Art ihrer Monomereinheiten, der Verteilung ihrer Monomereinheiten in den Polymerketten, oder anderen Eigenschaften unterscheiden.

Aus dem Stand der Technik sind bereits Verfahren zur kontinuierlichen gleichzeitigen Herstellung eines ersten Polycarbonats und mindestens eines zweiten, vom ersten Polycarbonat verschiedenen, Polycarbonats nach dem Schmelzeumesterungsverfahren in ein und derselben Produktionsanlage aus ein und demselben Oligocarbonat bekannt.

So wird in der WO2015/155737A1 die Herstellung von Polycarbonaten verschiedener Molmasse in verschiedenen Strängen von Reaktoren einer Produktionsanlage beschrieben. Das Verfahren hat allerdings den Nachteil, dass am Ende des Verfahrens bestimmte Stoffe zur Reduktion des Molekulargewichts, sogenannte kettenverkürzendes Agentien (chain scission agents) eingesetzt werden müssen. Diese kettenverkürzenden Agentien verkürzen die Polymerketten und sind nicht mit kettenabbrechenden Agentien zu verwechseln, die nur ein weiteres Kettenwachstum hemmen oder verhindern, eine vorhandene Kette aber nicht verkürzen. Die kettenverkürzenden Agentien werden am Ende des Verfahrens zusätzlich zugegeben. Jedoch können diese Stoffe zu einer ungenügenden Schmelzestabilität des Endprodukts führen, das heißt, das Endprodukt kann bei weiterer Verarbeitung, beispielsweise in einem Extruder oder einer Spritzgussmaschine, eine Verminderung der Viskosität durch Molekulargewichtsabbau erleiden, was das Endprodukt für die weitere Verarbeitung unbrauchbar machen kann. Ferner ist eine exakte Einstellung des Molekulargewichts nur schwer möglich. Ein weiterer Nachteil dieses Verfahrens ist, dass aus den verschiedenen Strängen von Reaktoren zwar Polycarbonate unterschiedlicher Molekulargewichte, entsprechend unterschiedlichen Lösungsviskositäten, erhalten werden können, nicht aber Polycarbonate mit unterschiedlichen Monomereinheiten oder unterschiedlicher Zusammensetzung der Monomereinheiten. Außerdem gibt diese Anmeldung keine Lehre zum Handeln, wie neben einem unverzweigten Polycarbonat-Homopolymer, das nur aus einem einzigen Diarylcarbonat und nur einem einziges Bisphenol aufgebaut ist, gleichzeitig eine Polycarbonat-basierte Spezialität wie beispielsweise ein verzweigtes Polycarbonat oder ein Copolycarbonat, ein Block-Copolycarbonat, beispielsweise ein Siloxan-basiertes Block- Copolycarbonat oder ein Polyester-basiertes Block-Copolycarbonat, ein Polyestercarbonat oder ein Polycarbonat, das aus einem Diarylcarbonat und mindestens zwei verschiedene Bisphenolen aufgebaut ist, auf ein und derselben Produktionsanlage hergestellt werden kann.

WO2008/012987A1 beschreibt ein Verfahren zur kontinuierlichen Herstellung von Polycarbonat, bei dem nach der Herstellung der Reaktionsmischung eine Aufteilung des Produktstromes zur Polykondensation auf mehrere Stränge von Reaktoren erfolgt. Die Stränge von Reaktoren sind jedoch gleichartig aufgebaut und es werden keine weiteren Reaktanden zu der Reaktionsmischung hinzugefügt. Daher ist es nicht möglich, mit dieser Anlagenkonfiguration neben einem unverzweigten Polycarbonat-Homopolymer, das nur aus einem einzigen Diarylcarbonat und nur einem einziges Bisphenol aufgebaut ist, gleichzeitig auf ein- und derselben Produktionsanlage eine Polycarbonat-basierende Spezialität wie beispielsweise ein verzweigtes Polycarbonat oder ein Copolycarbonat, ein Block-Copolycarbonat, beispielsweise ein Siloxan-basiertes Block-Copolycarbonat oder ein Polyester-basiertes Block-Copolycarbonat, ein Polyestercarbonat oder ein Polycarbonat, das aus einem Diarylcarbonat und mindestens zwei verschiedenen Bisphenolen aufgebaut ist, herzustellen. So ist es auch nach der Lehre von WO2008/012987A1 nur möglich Polycarbonate unterschiedlicher Molekulargewichte, entsprechend unterschiedlichen Lösungsviskositäten, zu erhalten, nicht aber Polycarbonate mit unterschiedlichen Monomereinheiten oder unterschiedlicher Zusammensetzung der Monomereinheiten.

WO2013/189823A1 beschreibt ein Verfahren zur kontinuierlichen Herstellung von Polycarbonat in einem dreistufigen Verfahren aus einem ersten Prä-Polykondensationsschritt, einem zweiten Prä-Polykondensationsschritt und der abschließenden Polykondensation. Hierbei werden den geteilten Zwischenströmen zwischen Umesterungsreaktion und Prä-Polykondensation Diarylcarbonat, beispielsweise Diphenylcarbonat zudosiert, um jeweils ein gewünschtes OH/Arylcarbonat-Endgruppeverhältnis zu erzielen. Das Diarylcarbonat wird dabei über eine Kolonne im Verfahren rückgeführt. Die Zudosierung von Diarylcarbonat hat aber den Nachteil, dass mehr Hydroxyaryl, beispielsweise Phenol im Falle von Diphenylcarbonat als Diarylcarbonat, entsteht. Das vergrößert auch die Menge der Brüden, die entfernt werden müssen.

Wie die Zusammenschau des einschlägigen Stands der Technik zeigt, wird in heutigen Produktionsanlagen zur Herstellung von Polycarbonat auf einer Produktionsanlage zu einem bestimmten Zeitpunkt immer nur ein bestimmtes Polycarbonat mit einer bestimmten Viskosität oder bestimmten Zusammensetzung der Monomereinheiten produziert. Um ein anderes Polycarbonat zu produzieren, müssen die Anlagenparameter verändert werden, da zur Produktion beispielsweise eines Polycarbonats einer anderen Viskosität beispielsweise eine andere Verweilzeit oder andere Temperatur- und Druckeinstellungen benötigt werden. Bei einer industriellen Produktionsanlage zur Produktion eines bestimmten Polycarbonats führt dies zu einem immensen Anfall von Material, welches nicht der geforderten Spezifikation entspricht, da es sich aus einer Mischviskosität zusammensetzt. In diesen Fällen wird aufgrund der langen Verweilzeiten in einer Produktionsanlage über viele Stunden ein Mischprodukt als Übergangsware produziert. Diese Übergangsware kann nicht als solche verkauft werden und muss gegebenenfalls entsorgt oder mit anderen Polycarbonaten verschnitten werden, um ein verkaufsfähiges Produkt zu erhalten.

Noch drastischer stellt sich die Situation dar, wenn beispielsweise zur Produktion eines Polycarbonats einer anderen Zusammensetzung der Monomereinheiten andere Reaktoren benötigt werden. Dazu muss eine bestehende Produktionsanlage grundlegend verändert werden oder eine neue aufgebaut werden. Dies lohnt sich nur, wenn in Aussicht steht, dass dauerhaft große Mengen dieses Polycarbonats produziert und verkauft werden können, nicht aber, wenn nur geringe Mengen dieses Produkts am Markt platziert werden können.

Insbesondere bei der Herstellung von Polycarbonat-basierten Spezialitäten wie verzweigten Polycarbonaten oder Copolycarbonaten, Block-Copolycarbonaten, beispielsweise Siloxan-basierten Block-Copolycarbonaten oder Polyester-basierten Block-Copolycarbonaten, Polyestercarbonaten oder Polycarbonaten, die aus einem Diarylcarbonat und mindestens zwei verschiedenen Bisphenolen aufgebaut sind, ist vor und nach Herstellung die Produktionsanlage gründlich zu reinigen. Insbesondere in dem Fall, wo auf einer Produktionsanlage ein transluzentes oder opakes Copolycarbonat hergestellt wurde, ist es erforderlich, Reste des Co-Monomeren restlos zu entfernen, um anschließend ein Polycarbonat mit hoher Transparenz zu produzieren. Dies führt bei heutigen Produktionsanlagen zu einem hohen Anfall an Spülmaterial und Übergangsware, die nicht der Spezifikation entspricht. Daher wurde es bislang zumeist vermieden, unterschiedliche Polycarbonate in ein und derselben Produktionsanlage herzustellen.

Diese Vorgehensweise ist jedoch ineffizient und ist aus ökonomischen und ökologischen Gründen unerwünscht. Auch aus Produktionsplanungssicht wäre es von Vorteil, wenn eine Produktionsanlage mehrere voneinander verschiedene Polycarbonate gleichzeitig produzieren könnte.

Aufgabe der vorliegenden Erfindung ist es daher, die Nachteile des Stands der Technik zu überwinden.

Insbesondere Aufgabe der vorliegenden Erfindung ist es, ein Verfahren zur gleichzeitigen kontinuierlichen Herstellung eines ersten Polycarbonats und mindestens eines davon verschiedenen zweiten Polycarbonats in ein und derselben Produktionsanlage aus ein und demselben Oligocarbonat zur Verfügung zu stellen.

Unter dem Begriff "Oligocarbonat" ist im Rahmen der vorliegenden Erfindung ein Polykondensationserzeugnis zu verstehen, dass als wiederkehrende Monomereinheit die Einheit 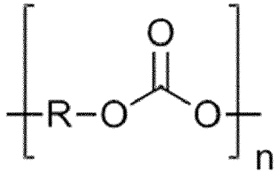 aufweist, und das eine Lösungsviskosität bis einschließlich 1,18 aufweist.

Unter dem Begriff "Polycarbonat" ist im Rahmen der vorliegenden Erfindung ein Polykondensationserzeugnis zu verstehen, dass als wiederkehrende Monomereinheit die Einheit 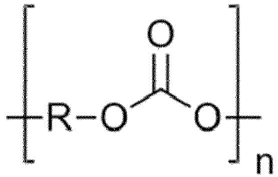 aufweist, und das eine Lösungsviskosität von mehr als 1,18 aufweist.

Im Rahmen der vorliegenden Erfindung ist ein erstes Polycarbonat von einem zweiten Polycarbonat "verschieden", oder in anders ausgedrückt "verschiedenartig" oder "unterschiedlich", wenn diese Polycarbonate sich hinsichtlich mindestens einem der folgenden Merkmale unterscheiden:
Molekulargewicht, Lösungsviskosität, Verzweigungsgrad, Art der Monomereinheiten, Verteilung der Monomereinheiten in den Polymerketten.

Das Molekulargewicht kann beispielsweise durch Gelpermeationschromotographie nach DIN 55672-1:2007-08 ermittelt werden, kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(RI)-Detektors.

Die Lösungsviskosität, auch als relative Lösungsviskosität, ηrel, oder eta rel bezeichnet, wird dabei in Dichlormethan bei einer Konzentration von 5 g Probe pro Liter Dichlormethan bei 25 °C mit einem Ubbelohdeviskosimeter bestimmt.

Unter dem Begriff "verzweigt" ist im Rahmen der vorliegenden Erfindung ein Polycarbonat zu verstehen, das ein oder mehrere Verzweigungsstellen aufweist.

Im Rahmen der vorliegenden Erfindung ist unter dem Begriff "Verzweigungsstelle" eine bestimmte chemische Struktur zu verstehen, die in einem ausreagiertem Polycarbonat vorliegt. Beispielsweise weist eine solche erfindungsgemäße Verzweigungsstelle eine chemische Struktur entsprechend einer der Formeln IIa bis IIf auf, bevorzugt eine chemische Struktur entsprechend der Formel IIa: 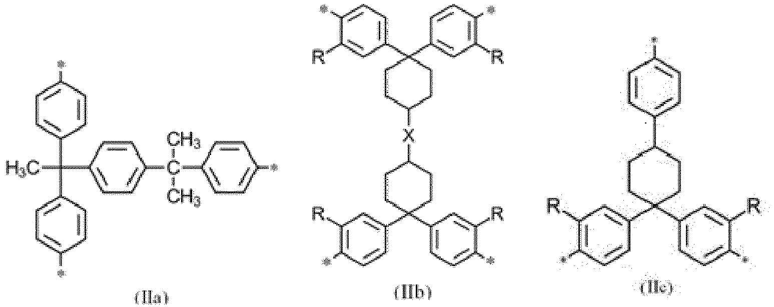 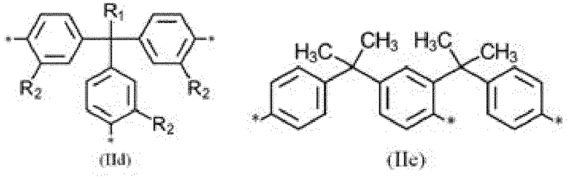 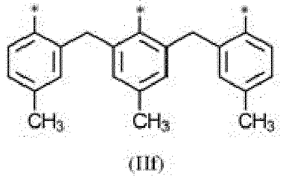
wobei "*" eine Verbindung zwischen der Verzweigungsstelle zur Polycarbonatkette darstellt und wobei
R ausgewählt ist aus einer Gruppe bestehend aus H und Alkyl, bevorzugt ausgewählt aus H und Methyl,
X ausgewählt ist aus einer Gruppe besteht aus linearem oder verzweigten Alkylengruppen und einer Einfachbindung, bevorzugt ausgewählt aus C(CH₃)₂ und einer Einfachbindung,
R₁ ausgewählt ist aus einer Gruppe bestehend aus H und Alkyl, bevorzugt ausgewählt aus H und Methyl, und
R₂ ausgewählt ist aus einer Gruppe bestehend aus H und Alkyl, bevorzugt ausgewählt aus H und Methyl.

Erfindungsgemäß können die verzweigten Polycarbonate eine Art von Verzweigungstellen oder eine Mischung von verschiedenen Verzweigungstellen aufweisen. In einer bevorzugten Ausführungsform der vorliegenden Erfindung kann die Verzweigungsstelle durch die Formeln (IIa), (IIb), (IIc), (IId) und/oder (IIf) dargestellt werden. In einer besonders bevorzugten Ausführungsform kann die Verzweigungsstelle durch die Formel (IIa) dargestellt werden. Insbesondere sind R₁ und R₂ unabhängig voneinander ausgewählt aus der Gruppe bestehend aus H und Alkyl. Ganz insbesondere ist R₁ gleich Methyl und R₂ gleich H.

Alternativ bevorzugt können Verzweigungsagentien wie Trisphenole, Quarterphenole oder Säurechloride von Tri- oder Tetracarbonsäuren oder Gemische der Polyphenole oder der Säurechloride verwendet werden. Einige der als Verzweiger geeigneten Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, oder 2,4-Bis-(4-hydroxyphenyl-20 isopropyl)-phenol, Tetra-(4-hydroxyphenyl)-methan. Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol. Bevorzugte Verzweiger sind 3,3-Bis-(3-methyl-4-hydroxyphenyl)-2-oxo-2,3-dihydroindol und 1,1,1 -Tri-(4-hydroxyphenyl)-ethan.

In einer anderen Alternative sind Verzweigungsagentien wie mehrfach funktionalisierte Hydroxyl- und/oder Carboxylverbindungen wie beispielsweise Isatinbiskresol, Tris-(hydroxyphenyl)ethan (THPE), Trimellitsäure, Timellitsäureanhydrid oder Trimesinsäure bevorzugt.

Unter dem Begriff Produktionsanlage ist im Rahmen der vorliegenden Erfindung eine Anlage zu verstehen, die mindestens 5 Kilotonnen pro Jahr (kt/a), bevorzugt mindestens 10 kt/a, besonders bevorzugt mindestens 20 kt/a, ganz besonders bevorzugt mindestens 50 kt/a Polycarbonat produziert.

Unter dem Begriff "ein und derselben" Produktionsanlage ist im Rahmen der vorliegenden Erfindung zu verstehen, dass alle in der Produktionsanlage hergestellten Polycarbonate als Edukt ein und dasselbe Oligocarbonat haben und die Umsetzung des Oligocarbonats zu jedem der hergestellten Polycarbonate kontinuierlich verläuft.

Eine solche Produktionsanlage weist mehrere zusammenhängende Verfahrensteile wie Rohstoffversorgung, Polymersynthese und Aufarbeitung auf. In diesen Verfahrensteilen wird ein oder Polycarbonat oder werden mehrere verschiedene Polycarbonate bis zu einer gewünschten Lösungsviskosität hergestellt. Die Produktionsanlage kann dabei beispielsweise mehrere kontinuierlich betriebenen Vorlagen, Rühr-, Umpump- und Rohreaktoren sowie Extruder, Knet-Ring- oder Scheibenreaktoren aufweisen.

Überraschender Weise wird die Aufgabe erfindungsgemäß gelöst durch den Gegenstand des ersten Anspruchs.

Insbesondere wird die wird die Aufgabe erfindungsgemäß gelöst durch ein:
Schmelzeumesterungsverfahren zur kontinuierlichen gleichzeitigen Herstellung eines ersten Polycarbonats und mindestens eines zweiten Polycarbonats, wobei das Schmelzeumesterungsverfahren folgende Schritte umfasst:
(I) Bereitstellung eines Mengenstroms eines Oligocarbonats,
(II) Aufteilung des Mengenstroms des Oligocarbonats in mindestens zwei Teilmengenströme des Oligocarbonats,
(III) Leitung eines ersten Teilmengenstroms der mindestens zwei Teilmengenströme des Oligocarbonats auf einen ersten Strang von Reaktoren von mindestens zwei zueinander parallel geschalteten Strängen von Reaktoren eines zweiten Anlagenteils und Leitung eines zweiten Teilmengenstroms der mindestens zwei Teilmengenströme des Oligocarbonats auf einen zweiten Strang von Reaktoren von mindestens zwei zueinander parallel geschalteten Strängen von Reaktoren eines zweiten Anlagenteils,
(IV) Umsetzung des Oligocarbonats zu einem ersten Polycarbonat in einem ersten Strang von Reaktoren der mindestens zwei zueinander parallelen Stränge von Reaktoren und Umsetzung des Oligocarbonats zu einem zweiten Polycarbonat in einem zweiten Strang von Reaktoren der mindestens zwei zueinander parallelen Stränge von Reaktoren,
wobei
in den parallel geschalteten Strängen von Reaktoren gleichzeitig jeweils verschiedenartige Polycarbonate hergestellt werden, wobei bereits bei der Bereitstellung des Mengenstroms des Oligocarbonats bis zur Aufteilung in Teilmengenströme mindestens ein Katalysator zugegeben wird und nach der Aufteilung in Teilmengenströme in mindestens einem der Teilmengenströme ein oder mehrere Co-Reaktanden und/oder ein oder mehrere Katalysatoren hinzugefügt werden, wobei die Lösungsviskosität des jeweiligen Polycarbonats nach Schritt (IV) größer ist als die Lösungsviskosität des jeweiligen Polycarbonats in den vorhergehenden Verfahrensschritten.

Jeder der Teilmengenströme in Schritt (III) wird also auf einen "eigenen" Strang von Reaktoren geleitet.

Das erfindungsgemäße Verfahren ermöglicht somit die gleichzeitige Herstellung mindestens zweier Polycarbonate, die sich hinsichtlich mindestens einem der folgenden Merkmale unterscheiden:
Molekulargewicht, Lösungsviskosität, Verzweigungsgrad, Art der Monomereinheiten, Verteilung der Monomereinheiten in den Polymerketten.

Dabei erfolgt Schritt (I) bevorzugt in einem ersten Anlagenteil und die Schritte (III) und (IV) bevorzugt in einem zweiten Anlagenteil. Der zweite Anlagenteil besteht dabei aus mindestens zwei zueinander parallel geschalteten Strängen von Reaktoren.

Schritt (II) erfolgt am Übergang vom ersten auf den zweiten Anlagenteil.

Daher lässt sich die erfindungsgemäße Lösung der Aufgabe alternativ beschreiben als:
Schmelzeumesterungsverfahren zur kontinuierlichen gleichzeitigen Herstellung eines ersten Polycarbonats und mindestens eines zweiten Polycarbonats nach dem Schmelzeumesterungsverfahren, wobei das Schmelzeumesterungsverfahren folgende Schritte umfasst:
(I) Bereitstellung eines Mengenstroms eines Oligocarbonats, in einem ersten Anlagenteil,
(II) Aufteilung des Mengenstroms des Oligocarbonats in mindestens zwei Teilmengenströme des Oligocarbonats,
(III) Leitung eines ersten Teilmengenstroms der mindestens zwei Teilmengenströme des Oligocarbonats auf einen ersten Strang von Reaktoren von mindestens zwei zueinander parallel geschalteten Strängen von Reaktoren eines zweiten Anlagenteils und Leitung eines zweiten Teilmengenstroms der mindestens zwei Teilmengenströme des Oligocarbonats auf einen zweiten Strang von Reaktoren von mindestens zwei zueinander parallel geschalteten Strängen von Reaktoren eines zweiten Anlagenteils,
(IV) Umsetzung des Oligocarbonats zu einem ersten Polycarbonat in einem ersten Strang von Reaktoren der mindestens zwei zueinander parallelen Stränge von Reaktoren des zweiten Anlagenteils und Umsetzung des Oligocarbonats zu einem zweiten Polycarbonat in einem zweiten Strang von Reaktoren der mindestens zwei zueinander parallelen Stränge von Reaktoren des zweiten Anlagenteils,
wobei
in den parallel geschalteten Strängen von Reaktoren des zweiten Anlagenteils gleichzeitig jeweils verschiedenartige Polycarbonate hergestellt werden, wobei bereits bei der Bereitstellung des Mengenstroms des Oligocarbonats im ersten Anlagenteil diesem Mengenstroms des Oligocarbonats mindestens ein Katalysators zugegeben wird und in mindestens einem der Teilmengenströme im zweiten Anlagenteil dem betreffenden Teilmengenstrom ein oder mehrere Co-Reaktanden und/oder ein oder mehrere Katalysatoren hinzugefügt werden, wobei die Lösungsviskosität des jeweiligen Polycarbonats nach Schritt (IV) größer ist als die Lösungsviskosität des jeweiligen Polycarbonats in den vorhergehenden Verfahrensschritten.

Im Rahmen der vorliegenden Erfindung ist somit der Ausdruck "bis zur Aufteilung in Teilmengenströme" gleichbedeutend mit dem Ausdruck "im ersten Anlagenteil" und der Ausdruck "nach der Aufteilung in Teilmengenströme" gleichbedeutend mit dem Ausdruck "im zweiten Anlagenteil".

Klarstellend sei an dieser Stelle noch angemerkt, dass im Rahmen der vorliegenden Erfindung der Begriff "Strang von Reaktoren" oder der Begriff "Stränge von Reaktoren" auch umfasst, dass ein solcher Strang nur einen Reaktor umfasst.

Weder der erste Anlagenteil noch der zweite Anlagenteil sind dabei durch die Art und Anzahl der darin vorhandenen Vorrichtungen gekennzeichnet, sondern dadurch, welche Lösungsviskosität das in dem ersten Anlagenteil oder dem zweiten Anlagenteil hergestellte Oligocarbonat erreicht hat. Die Lösungsviskosität des Oligocarbonats kann dabei durch Messung einer Probe des Oligocarbonats ermittelt werden. Ein solche Probe des Oligocarbonats kann an zahlreichen verschiedenen Stellen der Produktionsanlage entnommen werden, sowohl bis zur Aufteilung in Teilmengenströme, als auch nach der Aufteilung in Teilmengenströme, bevorzugt aber vor Schritt (IV).

Einem Fachmann auf dem Gebiet der Herstellung von Polycarbonat ist der grundsätzliche Aufbau von Produktionsanlagen zur Herstellung von Polycarbonat sowohl aus eigener Erfahrung als auch aus Veröffentlichungen bekannt. Daher kann ein Fachmann sowohl an einer bestehenden als auch an einer neu zu planenden oder neu zu erstellenden Produktionsanlage ohne weiteres bestimmen, welches der erste Anlagenteil einer solchen Produktionsanlage ist und welches der zweite Anlagenteil einer solchen Produktionsanlage ist, wenn dieser Fachmann, beispielsweise durch Probennahme bei einer bestehenden Produktionsanlage oder durch Berechnungen bei einer zu planenden oder zu erstellenden Produktionsanlage, die Lösungsviskosität des in der Produktionsanlage hergestellten Oligocarbonats bestimmt. Wenn der Fachmann durch Probenahme bestimmt, welches der erste Anlagenteil einer solchen Produktionsanlage ist und welches der zweite Anlagenteil einer solchen Produktionsanlage ist, führt er bevorzugt mehr als eine Probenahme, besonders bevorzugt zwei und mehr Probennahmen durch. Dabei findet eine erste Probennahme im ersten Anlagenteil statt und eine zweite Probennahme im zweiten Anlagenteil statt. Die Probennahmen erfolgen also an verschiedenen Stellen der Produktionsanlage.

Erfindungsgemäß erfolgt dabei die Aufteilung des Mengenstroms des Oligocarbonats in mindestens zwei Teilmengenströme, wenn das Oligocarbonat eine Lösungsviskosität von 1,04 bis 1,18 aufweist.

Erfindungsgemäß bevorzugt erfolgt dabei die Aufteilung des Mengenstroms des Oligocarbonats in mindestens zwei Teilmengenströme, wenn das Oligocarbonat eine Lösungsviskosität von 1,05 bis 1,12, bevorzugt 1,06 bis 1,10 aufweist.

Alternativ erfindungsgemäß bevorzugt erfolgt dabei die Aufteilung des Mengenstroms des Oligocarbonats in mindestens zwei Teilmengenströme, wenn das Oligocarbonat eine Lösungsviskosität von 1,13 bis 1,18, bevorzugt von 1,14 bis 1,16 aufweist.

In einer weiteren erfindungsgemäßen Alternative erfolgt die Aufteilung des Mengenstroms des Oligocarbonats in mehr als zwei Teilmengenströme. Dabei kann die Aufteilung in mehr als zwei Teilmengenströme stattfinden, wenn eine einzige bestimmte, angestrebte Lösungsviskosität vorliegt, oder es findet eine erste Aufteilung des Mengenstroms statt, wenn eine erste bestimmte, angestrebte Lösungsviskosität vorliegt, und dann findet mindestens eine zweite Aufteilung eines der aus der ersten Aufteilung erhaltenen Teilmengenströme statt, wenn eine zweite bestimmte, angestrebte, von der ersten Lösungsviskosität unterschiedliche Lösungsviskosität vorliegt. Folgt einer solchen zweiten Aufteilung in Teilmengenströme nur eine weitere, dritte Aufteilung in Teilmengenströme statt, so kann diese Aufteilung in Teilmengenströme an dem Teilmengenstrom vorgenommen werden, der nicht von der zweiten Aufteilung betroffen war, oder diese Aufteilung in Teilmengenströme kann an einem Teilmengenstrom vorgenommen werden, die aus der zweiten Aufteilung in Teilmengenströme hervorgegangen ist. Dieses Muster lässt sich in beliebigen Variationen mit beliebig vielen Aufteilungen fortsetzen, solange die Lösungsviskosität mindestens 1,04 und höchstens 1,18 beträgt und die Lösungsviskosität bei einer Aufteilung in Teilmengenströme nicht geringer ist als die Lösungsviskosität bei der vorherigen Aufteilung in Teilmengenströme des Mengenstroms bzw. des betreffenden Teilmengenstroms.

Auch ist es erfindungsgemäß bevorzugt, dass zu keinem Zeitpunkt nach der Aufteilung in Teilmengenströme ein kettenverkürzendes Agens zugefügt wird. Damit sind beispielsweise monofunktionelle Verbindungen, beispielsweise Monophenole oder Diarylcarbonate, insbesondere Diphenylcarbonat, gemeint.

Weiter ist es erfindungsgemäß bevorzugt, dass zu keinem Zeitpunkt bis zur Aufteilung in Teilmengenströme ein kettenverkürzendes Agens zugefügt wird.

Weiter ist es erfindungsgemäß bevorzugt, dass in dem Falle, dass in mehrere der mindestens zwei Teilmengenströme nach der Aufteilung in Teilmengenströme ein oder mehrere Co-Reaktanden und/oder ein oder mehrere Katalysatoren hinzugefügt werden, mindestens einer der Co-Reaktanden und/oder mindestens einer der Katalysatoren in einem der Teilmengenströmen unterschiedlich ist von den Co-Reaktanden und/oder Katalysatoren in einem anderen Teilmengenstrom.

Weiter ist es erfindungsgemäß bevorzugt, dass in den mindestens zwei Strängen von Reaktoren nach der Aufteilung in Teilmengenströme unterschiedliche Reaktionsbedingungen herrschen.

Weiter ist es erfindungsgemäß bevorzugt, dass in den mindestens zwei Strängen von Reaktoren nach der Aufteilung in Teilmengenströme hinsichtlich der Art und/oder der Anzahl der Reaktoren unterscheiden.

Weiter ist es erfindungsgemäß bevorzugt, dass der Durchsatz des Teilmengenstroms in einem ersten Strang von Reaktoren der mindestens zwei zueinander parallelen Stränge von Reaktoren nach der Aufteilung in Teilmengenströme größer ist als der Durchsatz des Teilmengenstroms in einem zweiten oder weiteren Strang von Reaktoren der mindestens zwei zueinander parallelen Stränge nach der Aufteilung in Teilmengenströme.

Dabei ist besonders bevorzugt der Durchsatz in dem ersten Strang von Reaktoren der mindestens zwei zueinander parallelen Stränge von Reaktoren nach der Aufteilung in Teilmengenströme mindestens zweimal größer, vorzugsweise mindestens dreimal größer, insbesondere mindestens fünfmal größer als der Durchsatz des Teilmengenstroms in einem zweiten oder weiteren Strang von Reaktoren der mindestens zwei zueinander parallelen Stränge von Reaktoren nach der Aufteilung in Teilmengenströme.

Weiter ist es erfindungsgemäß bevorzugt, dass im zweiten Strang von Reaktoren nach der Aufteilung in Teilmengenströme mindestens ein Inhibitor zugegeben wird.

Unter dem Begriff Inhibitor wird im Rahmen der vorliegenden Erfindung ein Agens verstanden, das die Aktivität des mindestens einen Katalysators bis zur Aufteilung in Teilmengenströme verringert.

Der mindestens eine Inhibitor ist bevorzugt ausgewählt aus Säurekomponenten wie Lewis- oder Brönstedsäuren oder Ester starker Säuren. Der pKa-Wert des Inhibitors sollte nicht größer als 5, bevorzugt kleiner 3 sein. Die Säurekomponente wird bzw. deren Ester werden zugegeben, um die und damit die Reaktion im Idealfall zum Erliegen zu bringen. Solche Inhibitoren sind beispielweise in EP1612231A1, EP0435124A1 oder DE4438545A1 beschrieben.

Beispiele für geeignete Säurekomponenten sind ortho-Phosphorsäure, phosphorige Säure, Pyrophosphorsäure, Hypophosphorsäure, Polyphosphorsäuren, Benzolphosphonsäure, Natriumdihydrogenphosphat, Borsäure, Arylboronsäuren, Salzsäure (Chlorwasserstoff), Schwefelsäure, Benzolsulfonsäure, Toluolsulfonsäure, Dodekylbenzolsulfonsäure und alle sonstigen Phenylsubstituierten Benzolsulfonsäuren, Salpetersäure, Säurechloride wie Chlorameisensäurephenylester, Acetoxy-BP-A, Benzoylchlorid sowie Ester, Halbester und verbrückte Ester der oben genannten Säuren wie beispielsweise Toluolsulfonsäureester, Phosphorsäureester, Phosphorigsäureester, Phosphonsäureester, Dimethylsulfat, Borsäureester, Arylboronsäureester und andere unter Wassereinfluss säuregenerierende Komponenten wie Tri-isooctylphosphat (TOF), Ultranox 640 und BDP (Bisphenoldiphosphat-Oligomer).

Bevorzugt werden als Inhibitoren organische schwefelhaltige Säuren, Ester von organischen schwefelhaltigen Säuren oder Mischungen aus diesen eingesetzt. Bei den organischen schwefelhaltigen Säuren kann es sich beispielsweise um Benzolsulfonsäure, Toluolsulfonsäure, Trifluormethansulfonsäure, Naphthalinsulfonsäure oder sulfoniertes Polystyrol handeln. Bei den Ester von organischen schwefelhaltigen Säuren kann es sich beispielsweise um Dimethylsulfonat, Diethylsulfonat, Methyl-, Ethyl-, Propyl-, Butyl-, Octyl-, oder Phenylester von p-Toluolsulfonsäure oder Benzolsulfonsäure handeln. Ferner kann es sich um Voll- oder Teilester mehrwertiger Alkohole wie beispielsweise Glycerintribenzolsulfonsäureester, Glycerindibenzolsulfonsäureester, Glycerinmonobenzolsulfonsäureester, Glycerintri-p-toluolsulfonsäureester, Glycerin-di-p-toluolsulfonsäureester, Glycerin-mono-p-toluolsulfonsäureester, Ethylenglykoldibenzolsulfonsäureester, Ethylenglykolmonobenzolsulfonsäureester, Ethylenglykoldi-p-toluolsulfonsäureester, Ethylenglykolmono-p-toluolsulfonsäureester, Pentaerythrittetrabenzolsulfonsäureester, Pentaerythrittribenzolsulfonsäureester, Pentaerythritdibenzolsulfonsäureester, Pentaerythritmonobenzolsulfonsäureester, Pentaerythrittetra-p-toluolsulfonsäureester, Pentaerythrittri-p-toluolsulfonsäureester, Pentaerythritdi-p-toluolsulfonsäureester, Pentaerythritmono-p-toluolsulfonsäureester, Trimethylolpropantribenzolsulfonsäureester, Trimethylolpropandibenzolsulfonsäureester, Trimethylolpropanmonobnzolsulfonsäureester, Trimethylolpropantri-p-toluolsulfonsäureester, Trimethylolpropandi-p-toluolsulfonsäureester, Trimethylolpropanmono-p-toluolsulfonsäureester, Neopentylglykoldibenzolsulfonsäureester, Neopentylglykolmonobenzolsulfonsäureester, Neopentylglykoldi-p-toluolsulfonsäureester, Neopentylglykolmono-p-toluolsulfonsäureester sowie deren Mischungen handeln. Darüber hinaus können diese Mischungen noch Reste der Ausgangsverbindungen (Säurekomponente und/oder Alkoholkomponente) enthalten. Solche Inhibitoren sind beispielsweise aber nicht limitierend auch in EP1609818A2 beschrieben.

Die beschriebenen Inhibitoren können einzeln oder in beliebigen Mischungen untereinander oder mehreren verschiedenen Mischungen dem betreffenden Teilmengenstrom oder den betreffenden Teilmengenströmen zugesetzt werden.

Die Inhibitoren können in Mengen von kleiner 100 ppm bezogen auf das Polycarbonat eingesetzt werden, bevorzugt in Mengen von 0,1 bis 50 ppm bezogen auf das Polycarbonat. Im Falle von als Inhibitoren eingesetzten organischen schwefelhaltigen Säuren können diese beispielsweise in Mengen von 0,5 bis 10 ppm, bevorzugt in Mengen von 1 bis 5 ppm, bezogen auf das Polycarbonat, eingesetzt werden.

Bezüglich der Zugabeform der Inhibitoren gibt es keine Limitierung. Die Inhibitoren können als Feststoff, beispielsweise als Pulver, in Lösung oder als Schmelze oder unter Verwendung eines Masterbatches dem betreffenden Teilmengenstrom oder den betreffenden Teilmengenströmen zugesetzt werden.

Bevorzugt werden die Ester von organischen schwefelhaltigen Säuren in flüssiger Form zugegeben. Da die zu dosierenden Mengen sehr gering sind, werden vorzugsweise Lösungen der Ester oder Masterbatches verwendet.

Vorzugsweise werden solche Verbindungen als Lösemittel gewählt, die bereits als einer der Reaktanden in den jeweiligen Schmelzeumesterungsverfahren verwendet werden. Eventuell verbleibende Reste mindern je nach Anforderungsprofil des herzustellenden Produktes nicht die gewünschte Qualität.

Der mindestens eine Inhibitor ist besonders bevorzugt ausgewählt aus ein oder mehreren der Gruppe umfassend einen Sulfonsäureester oder eine Mischung verschiedener Sulfonsäureester.

In einer ganz besonders bevorzugten Ausführungsform handelt es sich bei den Sulfonsäureestern, aus denen der mindestens eine Inhibitor ausgewählt ist, um Ester aromatischer Sulfonsäuren R-SO₂(OH), wobei R ein C₆- bis C₂₀-Aryl oder C₇- bis C₁₂-Aralkyl, bevorzugt ausgewählt aus der Liste bestehend aus Phenyl, Kresyl, Xylenyl, Propylphenyl, Butylphenyl, tert.-Butylphenyl, besonders bevorzugt ausgewählt aus der Liste bestehend aus Phenyl, Kresyl, Xylenyl, am stärksten bevorzugt Phenyl ist.

Beispiele geeigneter Ester, aus denen der mindestens eine Inhibitor ausgewählt ist, sind ausgewählt aus mindestens einer Verbindung gemäß
a) der Formel (VIII) 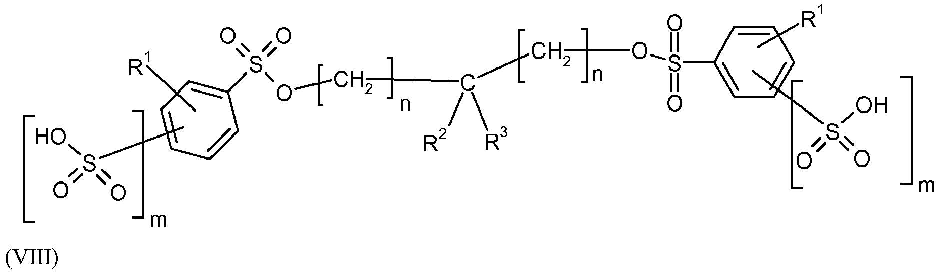
b) der Formel (IX) 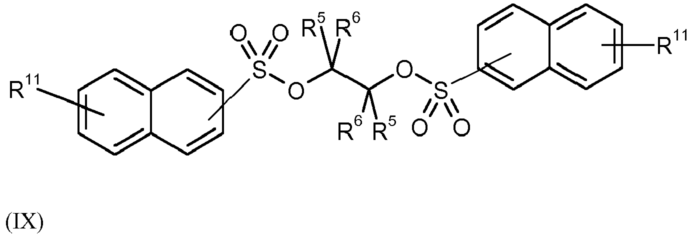
c) der Formel (X) 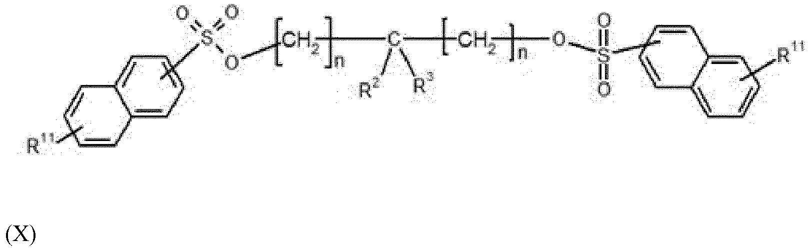 wobei in den Formeln (VIII), (IX) und (X)
   - R¹: unabhängig für Wasserstoff oder unsubstituiertes oder durch Halogen substituiertes C₁-C₂₀-Alkyl steht,
   - R² und R³: unabhängig voneinander für Wasserstoff, C₁-C₆-Alkyl oder C₄-C₃₀-Alkylcarboxyl, oder für den Rest 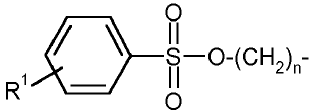
   stehen, worin
   - R¹: die oben genannte Bedeutung hat,
   - m: unabhängig voneinander für 0 oder 1 steht,
   - n: für 0, 1 oder 2 steht,
   - R⁵ und R⁶: unabhängig für Wasserstoff oder für C₁-C₂₀-Alkyl stehen, wobei Alkyl durch Halogen substituiert sein kann,
   - R¹¹: unabhängig für Wasserstoff oder Di-(C₁-C₄)-Alkylamino steht.

Weitere Beispiele geeigneter Sulfonsäureester, aus denen der mindestens eine Inhibitor ausgewählt ist, sind Verbindungen gemäß der Formeln (XI) bis (XVI). 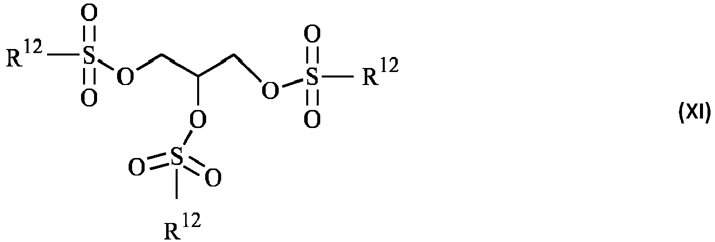 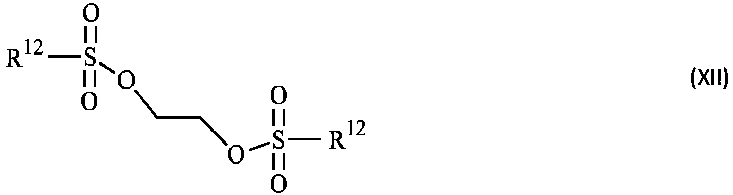 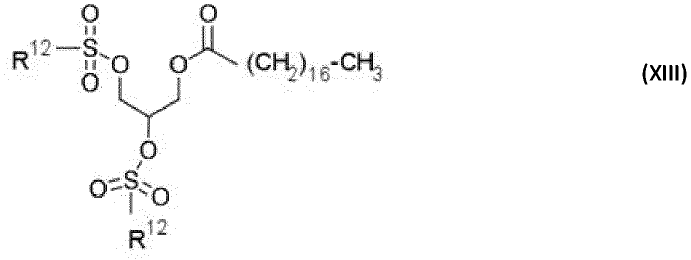 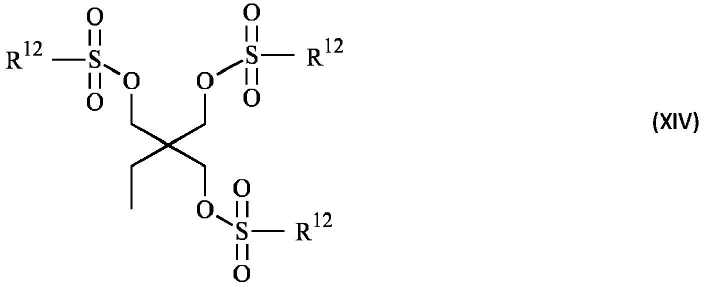 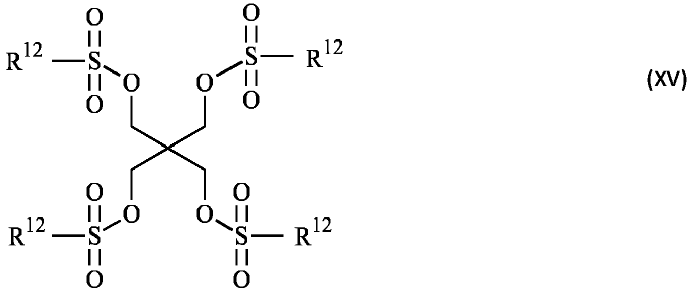 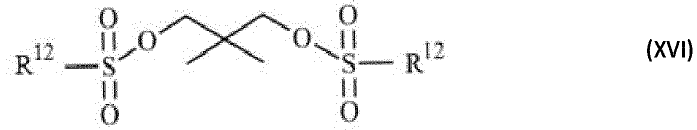 wobei R¹² in den Formeln (XI) bis (XVI) jeweils unabhängig voneinander für C₆- bis C₂₀-Aryl oder C₇- bis C₁₂-Aralkyl, bevorzugt ausgewählt aus der Liste bestehend aus Phenyl, Kresyl, Xylenyl, Propylphenyl, Butylphenyl, tert.-Butylphenyl, besonders bevorzugt ausgewählt aus der Liste bestehend aus Phenyl, Kresyl, Xylenyl, am stärksten bevorzugt Phenyl steht.

Am stärksten bevorzugt ist als Inhibitor der Sulfonsäureester gemäß Formel (XVII)

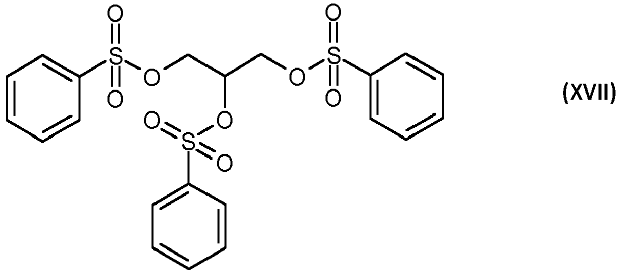

Die erfindungsgemäß geeigneten Inhibitoren können einzeln oder in beliebigen Mischungen untereinander der Zusammensetzung zugesetzt werden.

Die erfindungsgemäß geeigneten Inhibitoren haben bevorzugt Schmelzpunkte größer als 30°C, bevorzugt größer 40°C und besonders bevorzugt größer 50°C und Siedepunkte bei 1 mbar größer 150°C, bevorzugt größer 200°C und besonders bevorzugt größer 230°C.

Weiter ist es erfindungsgemäß bevorzugt, dass in einem ersten Strang von Reaktoren der mindestens zwei zueinander parallelen Stränge von Reaktoren nach der Aufteilung in Teilmengenströme ein unverzweigtes Polycarbonat-Homopolymer hergestellt wird, das nur aus einem einzigen Diarylcarbonat beispielsweise Diphenylcarbonat, und nur einem einziges Bisphenol, beispielsweise Bisphenol A, aufgebaut ist.

Zum unverzweigten Polycarbonat-Homopolymer, das nur aus einem einzigen Diarylcarbonat beispielsweise Diphenylcarbonat, und nur einem einziges Bisphenol, beispielsweise Bisphenol A, aufgebaut ist, sei erläuternd hinzugefügt, dass dies abgesehen von unvermeidlichen Verunreinigungen oder Fehlstrukturen, beispielsweise Friesverzweigungen, gilt.

Weiter ist es erfindungsgemäß bevorzugt, dass in einem zweiten Strang von Reaktoren der mindestens zwei zueinander parallelen Stränge von Reaktoren nach der Aufteilung in Teilmengenströme eine Polycarbonat-basierte Spezialität, beispielsweise ein verzweigtes Polycarbonat oder ein Copolycarbonat, vorzugsweise ausgewählt aus der Gruppe umfassend ein Block-Copolycarbonat, beispielsweise ein Siloxan-basiertes Block-Copolycarbonat oder ein Polyester-basiertes Block-Copolycarbonat, ein Polyestercarbonat oder ein Polycarbonat, das aus einem Diarylcarbonat, beispielsweise Diphenylcarbonat, und mindestens zwei verschiedenen Bisphenolen aufgebaut ist, beispielsweise Bisphenol A und Bisphenol TMC oder Bisphenol A und eines der weiter unten erläuterten Bisphenole der allgemeinen Formeln (IV) bis (VI), hergestellt wird. Dieses im zweiten Strang von Reaktoren hergestellte Polycarbonat unterscheidet sich von dem im ersten Strang von Reaktoren hergestellten Polycarbonat in mindestens einem der folgenden Merkmale: Molekulargewicht, Lösungsviskosität, Verzweigungsgrad, Art der Monomereinheiten, Verteilung der Monomereinheiten in den Polymerketten.

Die Agentien, die zur Herstellung dieser in einem zweiten Strang von Reaktoren der mindestens zwei zueinander parallelen Stränge von Reaktoren nach der Aufteilung in Teilmengenströme hergestellten Polycarbonate nötig sind, werden im Rahmen der vorliegenden Erfindung auch Co-Reaktanden genannt.

Dieser Co-Reaktand oder diese Co-Reaktanden ist bzw. sind ausgewählt aus der Gruppe reaktionsfähiger Substanzen enthaltend beispielsweise eine Dihydroxyarylverbindung anders als Bisphenol A (z.B. Bisphenol TMC, Resorcin, Hydrochinon, Isosorbit) oder ein Dihydroxyaryl-Oligomer verschieden von einem Bisphenol-A-Oligomer, funktionalisierte Siloxane, bevorzugt Hydroxy-funktionalisierte, Amino-funktionalisierte oder Carboxyl-funktionalisierte Siloxane, ein carbonsäurehaltiger Stoff, insbesondere aromatische und/oder aliphatische Dicarbonsäuren, insbesondere Phthalsäure, Terephthalsäure, Isophthalsäure oder Adipinsäure, Suberinsäure, Sebacinsäure, Dodecandisäure oder aromatische und/oder aliphatische Dicarbonsäureester, insbesondere Phthalsäuredimethylester, Terephthalsäuredimethylester, Isophthalsäuredimethylester, Terephthalsäureesterblöcke, Isophthalsäureesterblöcke, Resorcinesterblöcke, Dimerfettsäuren, Dimerfettsäureester, aromatische oder aliphatische Carbonsäureanhydride wie Phthalsäureanhydrid oder Maleinsäureanhydrid Hydroxy- oder Carboxyl-terminierte Polyester-telechele, Verzweigungsagentien wie mehrfach funktionalisierte Hydroxyl- und/oder Carboxylverbindungen wie beispielsweise Isatinbiskresol, Tris-(hydroxyphenyl)ethan (THPE), Trimellitsäure, Timellitsäureanhydrid oder Trimesinsäure.

Das erfindungsgemäße Schmelzeumesterungsverfahren ermöglicht es, die Kapazität und Kostenvorteile einer Produktionsanlage flexibel zu nutzen und ausgehend von ein und demselben Oligocarbonat neben einem in großer Menge hergestelltem ersten Polycarbonat gleichzeitig auf ein und derselben Produktionsanlage mindestens ein zweites, von dem ersten Polycarbonat verschiedenes Polycarbonat, als weiteres Produkt herzustellen, letzteres bevorzugt in kleinerer Menge.

Der Durchsatz an Oligocarbonat und an daraus entstehendem Polycarbonat kann in den mindestens zwei Strängen von Reaktoren nach der Aufteilung in mindestens zwei Teilmengenströme gleich oder unterschiedlich sein. Bevorzugt ist der Durchsatz an Oligocarbonat und an daraus entstehendem Polycarbonat in den mindestens zwei Strängen von Reaktoren nach der Aufteilung in mindestens zwei Teilmengenströme unterschiedlich. Dabei ist besonders bevorzugt der Durchsatz an Oligocarbonat bzw. an daraus entstehendem Polycarbonat in einem ersten Strang von Reaktoren - im weiteren auch Hauptstrang von Reaktoren genannt - der mindestens zwei zueinander parallelen Stränge von Reaktoren nach der Aufteilung in mindestens zwei Teilmengenströme mindestens zweimal größer, vorzugsweise mindestens dreimal größer, insbesondere mindestens fünfmal größer, ganz insbesondere mindestens zehnmal größer als der Durchsatz an Oligocarbonat und an daraus entstehendem Polycarbonat in einem zweiten oder weiteren Strang von Reaktoren der mindestens zwei zueinander parallelen Stränge von Reaktoren nach der Aufteilung in mindestens zwei Teilmengenströme. Der zweite Strang von Reaktoren bzw. weitere Stränge von Reaktoren wird bzw. werden auch als Nebenstrang bzw. als Nebenstränge von Reaktoren bezeichnet. Bei mehr als zwei Strängen von Reaktoren können alle Stränge von Reaktoren einen unterschiedlichen Durchsatz an Oligocarbonat und an daraus entstehendem Polycarbonat haben oder zwei oder mehr Stränge von Reaktoren haben denselben Durchsatz an Oligocarbonat bzw. an daraus entstehendem Polycarbonat und ein Strang hat einen davon unterschiedlichen Durchsatz an Oligocarbonat bzw. an daraus entstehendem Polycarbonat. Im letztgenannten Fall haben bevorzugt die Stränge von Reaktoren mit den kleineren Durchsätzen denselben Durchsatz an Oligocarbonat bzw. an daraus entstehendem Polycarbonat. Dieses Muster lässt sich in beliebigen Variationen auf Anlagen mit beliebig vielen Strängen von Reaktoren fortsetzen.

Ein Fachmann wäre davon ausgegangen, dass zur Herstellung von verschiedenartigen Polycarbonaten je eine Produktionsanlage für jedes der verschiedenartigen Polycarbonate benötigt würde, um einen großen Anfall von Material, welches nicht der geforderten Spezifikation entspricht, zu vermeiden. Dies hätte zur Folge, dass die Anzahl der Produktionsanlagen zur Herstellung von verschiedenen Polycarbonat nach dem Stand der Technik wesentlich größer wären als gemäß der vorliegenden Erfindung.

Alternativ - und um die Erhöhung der Anzahl der Produktionsanlagen zu vermeiden - wäre ein Fachmann davon ausgegangen, dass zur Herstellung von verschiedenartigen Polycarbonaten eine bestehende Anlage zeitlich hintereinander mit der Herstellung der verschiedenartigen Polycarbonaten beaufschlagt wird. Dies wiederum führt jedoch zu wieder zu einem großen Anfall von Material, welches nicht der geforderten Spezifikation entspricht, was jedoch ebenfalls vermieden werden soll.

Überraschend wurde jedoch gefunden, dass es durch ein Verfahren, in dem ein erster Anlagenteil, also der Anlagenteil vor der Aufteilung des Mengenstroms in mehrere Teilmengenströme, mit mehreren Strängen von Reaktoren in einem zweiten Anlagenteil, also dem Anlagenteil nach der Aufteilung in mehrere Teilmengenströme, kombiniert wird, möglich ist, neben einem unverzweigten Polycarbonat-Homopolymer, das nur aus einem einzigen Diarylcarbonat, beispielsweise Diphenylcarbonat, und nur einem einziges Bisphenol, beispielsweise Bisphenol A, aufgebaut ist, ein davon unterschiedliches Polycarbonat, beispielsweise ein verzweigtes Polycarbonat oder ein Copolycarbonat, vorzugsweise ausgewählt aus der Gruppe umfassend ein Block-Copolycarbonat, beispielsweise ein Siloxan-basiertes Block-Copolycarbonat oder ein Polyester-basiertes Block-Copolycarbonat, ein Polyestercarbonat oder ein Polycarbonat, das aus einem Diarylcarbonat, beispielsweise Diphenylcarbonat, und mindestens zwei verschiedenen Bisphenolen aufgebaut ist, beispielsweise Bisphenol A und Bisphenol TMC oder Bisphenol A und eines der weiter unten erläuterten Bisphenole der allgemeinen Formeln (IV) bis (VI), zeitgleich auf ein und derselben Produktionsanlage herzustellen.

Dabei wird zuerst ein Oligocarbonat hergestellt. Wenn dieses Oligocarbonat eine bestimmte, angestrebte, Lösungsviskosität erreicht hat, wird der Mengenstrom dieses Oligocarbonats in mindestens zwei Teilmengenströme aufgeteilt. Die Oligocarbonate in diesen Teilmengenströmen werden getrennt voneinander so weiterverarbeitet, dass mindestens zwei voneinander verschiedene Polycarbonate entstehen.

Es ist mit dem erfindungsgemäßen Schmelzeumesterungsverfahren also möglich, eine Polycarbonat-basierte Spezialität, beispielsweise ein verzweigtes Polycarbonat oder ein Copolycarbonat, vorzugsweise ausgewählt aus der Gruppe umfassend ein Block-Copolycarbonat, beispielsweise ein Siloxan-basiertes Block-Copolycarbonat oder ein Polyester-basiertes Block-Copolycarbonat, ein Polyestercarbonat oder ein Polycarbonat, das aus einem Diarylcarbonat, beispielsweise Diphenylcarbonat, und mindestens zwei verschiedenen Bisphenolen aufgebaut ist, beispielsweise Bisphenol A und Bisphenol TMC oder Bisphenol A und eines der weiter unten erläuterten Bisphenole der allgemeinen Formeln (IV) bis (VI), hergestellt wird, in geringerer Menge herzustellen, ohne die Herstellung beispielsweise eines unverzweigten Polycarbonat-Homopolymers, das nur aus einem einzigen Diarylcarbonat, beispielsweise Diphenylcarbonat, und nur einem einziges Bisphenol, beispielsweise Bisphenol A, aufgebaut ist, zu stören, also beispielsweise die Qualität des letztgenannten Polycarbonats zu verschlechtern.

Dass der Durchsatz des Hauptstrangs vor Reaktoren durch die Aufteilung des Mengenstroms nach dem ersten Anlagenteil in mindestens zwei Teilmengenströme im zweiten Anlagenteil zwangsläufig verringert wird, wird im Rahmen der vorliegenden Erfindung nicht als Störung der Herstellung beispielsweise eines unverzweigten Polycarbonat-Homopolymers, das nur aus einem einzigen Diarylcarbonat, beispielsweise Diphenylcarbonat, und nur einem einziges Bisphenol, beispielsweise Bisphenol A, aufgebaut ist betrachtet.

Bei welcher Lösungsviskosität die Aufteilung in mindestens zwei Teilmengenströme vorgenommen wird hängt davon ab, welche verschiedenartigen Polycarbonate erhalten werden sollen.

Das erfindungsgemäße Schmelzeumesterungsverfahren kann beispielsweise so durchgeführt werden, dass bis zur Aufteilung in Teilmengenströme eine Dihydroxyarylverbindung, beispielsweise ein Diphenol, und ein Diarylcarbonat, beispielsweise Diphenylcarbonat, gegebenenfalls mit weiteren Verbindungen, als Schmelze vorliegend in Gegenwart geeigneter Katalysatoren zu einem Oligocarbonat kondensiert werden. Die Lösungsviskosität des dabei entstehenden Oligocarbonats, das unter den bei der Herstellung vorliegenden Bedingungen ebenfalls als Schmelze vorliegt, wird bei steigenden Temperaturen und fallenden Drücken in geeigneten Apparaten und Vorrichtungen durch Abführen der sich abspaltenden Monohydroxyarylverbindung, beispielsweise Phenol, solange erhöht, bis die angestrebte Lösungsviskosität des Oligocarbonats erreicht ist. Durch Wahl des Verhältnisses von Dihydroxyarylverbindung zu Diarylcarbonat, durch die durch Wahl der Verfahrensweise und der Produktionsanlage zur Herstellung des Oligocarbonats gegebenen Verlustrate des Diarylcarbonats über die Brüden und durch gegebenenfalls zugesetzte Katalysatoren kann die angestrebte Lösungsviskosität eingestellt werden. Bezüglich der Art und Weise, in welchen Apparaten und auf welche Weise das Schmelzeumesterungsverfahren bis zu Aufteilung in mindestens zwei Teilmengenströme ausgeführt wird, gibt es keine Limitierung und Einschränkung, solange die gewählten Apparate und die gewählte Verfahrensweise eine Schmelzeumesterung unter entsprechend schneller Entfernung der abgespaltenen Monohydroxyarylverbindung die Einstellung einer bestimmten, angestrebten Lösungsviskosität bis zur Aufteilung in Teilmengenströme ermöglichen.

Weiter gibt es keine Limitierung und Einschränkung bezüglich der Temperaturen, Drücke oder der verwendeten Katalysatoren, um die Schmelzeumesterungsreaktion zwischen der Dihydroxyarylverbindung und dem Diarylcarbonat, durchzuführen. Jede Bedingung ist möglich, solange die gewählten Temperaturen, Drücke und Katalysatoren eine Schmelzeumesterung unter entsprechend schneller Entfernung der abgespaltenen Monohydroxyarylverbindung die Einstellung einer bestimmten, angestrebten Lösungsviskosität bis zur Aufteilung in Teilmengenströme.

Die abgespaltene Monohydroxyarylverbindung wird bis zur Aufteilung in Teilmengenströme durch Reaktions-Verdampfer-Stufen entfernt. Als Reaktions-Verdampfer-Stufen geeignete Vorrichtungen, Apparate und Reaktoren bis zur Aufteilung in Teilmengenströme sind entsprechend dem Verfahrensverlauf Wärmetauscher, Entspannungsapparate, beispielsweise Flashverdampfer, Abscheider, Kolonnen, Verdampfer, Rührbehälter und Reaktoren oder sonstige käufliche Apparate, welche die nötige Verweilzeit bei ausgewählten Temperaturen und Drucken bereitstellen. Die gewählten Vorrichtungen müssen den nötigen Wärmeeintrag ermöglichen und so konstruiert sein, dass sie den kontinuierlich wachsenden Lösungsviskositäten gerecht werden.

Alle Vorrichtungen, Apparate und Reaktoren sind über Pumpen, Rohrleitungen oder Ventile miteinander verbunden. Die Rohrleitungen zwischen allen Vorrichtungen, Apparate und Reaktoren sollten selbstverständlich so kurz wie möglich sein und die Krümmungen der Leitungen so gering wie möglich gehalten werden, um unnötig verlängerte Verweilzeiten zu vermeiden. Dabei sind die äußeren, das heißt technischen Rahmenbedingungen und Belange für Montagen chemischer Produktionsanlagen zu berücksichtigen.

Zur Durchführung des Verfahrens können die Reaktionspartner Dihydroxyarylverbindung und Diarylcarbonat entweder gemeinsam aufgeschmolzen oder aber die feste Dihydroxyarylverbindung in der Diarylcarbonatschmelze oder das feste Diarylcarbonat in der Schmelze der Dihydroxyarylverbindung gelöst werden oder beide Reaktionspartner Dihydroxyarylverbindung und Diarylcarbonat werden als Schmelze, bevorzugt direkt aus der Herstellung, zusammengeführt. Die Verweilzeiten der getrennten Schmelzen der Dihydroxyarylverbindung und des Diarylcarbonats, insbesondere die Verweilzeit der Schmelze der Dihydroxyarylverbindung, werden so kurz wie möglich eingestellt. Das Schmelzegemisch kann dagegen wegen des im Vergleich zu den einzelnen Rohstoffen erniedrigten Schmelzpunktes des Gemischs aus der Dihydroxyarylverbindung und dem Diarylcarbonat bei entsprechend niedrigeren Temperaturen ohne Qualitätseinbußen länger verweilen.

Danach wird bis zur Aufteilung in Teilmengenströme ein Katalysator, der vorzugsweise in Phenol gelöst vorliegt, zugemischt und die Schmelze auf die Reaktionstemperatur erhitzt. Diese beträgt beispielsweise zur Herstellung eines Polycarbonats aus 2,2-Bis-(4-hydroxyphenyl)-propan und Diphenylcarbonat 180 bis 220°C, vorzugsweise 190 bis 210°C, ganz besonders bevorzugt 190°C. Bei Verweilzeiten von 15 bis 90 min, vorzugsweise 30 bis 60 min, wird ein Reaktionsgleichgewicht eingestellt, ohne dass die gebildete Monohydroxyarylverbindung, beispielsweise Phenol beim Einsatz von Diphenylcarbonat als Diarylcarbonat, entnommen wird. Die Reaktion kann bei Atmosphärendruck, aber aus technischen Gründen auch bei Überdruck gefahren werden.

Danach wird bis zur Aufteilung in mindestens zwei Teilmengenströme das Schmelzegemisch in einer ersten Stufe in eine erste Vakuumkammer, deren Druck auf 100 bis 400 mbar absolut, vorzugsweise auf 150 bis 300 mbar absolut eingestellt wird, entspannt und direkt danach in einer geeigneten Vorrichtung bei gleichem Druck wieder auf die Eintrittstemperatur erhitzt. Bei dem Entspannungsvorgang wird die entstandene Monohydroxyarylverbindung, beispielsweise Phenol beim Einsatz von Diphenylcarbonat als Diarylcarbonat, mit noch vorhandenen, nicht umgesetzten, Monomeren verdampft. Nach einer Verweilzeit von 5 bis 30 min in einer Sumpfvorlage gegebenenfalls mit Umpumpen bei gleichem Druck und gleicher Temperatur wird das Reaktionsgemisch in einer zweiten Stufe in eine zweite Vakuumkammer, deren Druck 50 bis 200 mbar absolut, vorzugsweise 80 bis 150 mbar absolut, beträgt, entspannt und direkt danach in einer geeigneten Vorrichtung bei gleichem Druck auf eine Temperatur von 190 bis 250°C, bevorzugt 210 bis 240°C, besonders bevorzugt 210 bis 230°C, erwärmt. Auch hierbei wird die entstandene Hydroxyarylverbindung mit noch vorhandenen, nicht umgesetzten, Monomeren verdampft. Nach einer Verweilzeit von 5 bis 30 min in einer Sumpfvorlage, gegebenenfalls mit Umpumpen, bei gleichem Druck und gleicher Temperatur wird das Reaktionsgemisch in einer dritten Stufe in eine dritte Vakuumkammer, deren Druck 30 bis 150 mbar absolut, vorzugsweise 50 bis 120 mbar absolut beträgt, entspannt und direkt danach in einer geeigneten Vorrichtung bei gleichem Druck auf eine Temperatur von 220 bis 280°C, bevorzugt 240 bis 270°C, besonders bevorzugt 240 bis 260°C, erwärmt. Auch hierbei wird die entstandene Hydroxyarylverbindung mit noch vorhandenen, nicht umgesetzten, Monomeren verdampft. Nach einer Verweilzeit von 5 bis 20 min in einer Sumpfvorlage gegebenenfalls mit Umpumpen bei gleichem Druck und gleicher Temperatur wird das Reaktionsgemisch in einer vierten Stufe in eine vierten Vakuumkammer, deren Druck bei 5 bis 100 mbar absolut, bevorzugt 15 bis 100 mbar absolut, besonders bevorzugt 20 bis 80 mbar absolut beträgt, entspannt und direkt danach in einer geeigneten Vorrichtung bei gleichem Druck auf eine Temperatur von 250 bis 300°C, vorzugsweise 260 bis 290°C, besonders bevorzugt 260 bis 280°C, erwärmt. Auch hierbei wird die entstandene Hydroxyarylverbindung mit noch vorhandenen Monomeren verdampft. Die Vakuumkammern werden auch Flashstufen genannt.

Die Anzahl dieser Stufen bis zur Aufteilung in mindestens zwei Teilmengenströme, hier beispielhaft 4, kann zwischen 2 und 6 variieren. Die Temperaturen und Drucke sind bei Änderung der Anzahl der Stufen entsprechend anzupassen, um vergleichbare Resultate zu erhalten. Die in diesen Stufen erreichte Lösungsviskosität des Oligocarbonats liegt im Bereich von 1,04 bis 1,18, bevorzugt von 1,05 bis 1,12, besonders bevorzugt von 1,06 bis 1,10.

Optional zusätzlich kann bis zur Aufteilung in mindestens zwei Teilmengenströme nun das so erzeugte, als Schmelze vorliegende, Oligocarbonat nach einer Verweilzeit von 5 bis 20 min in einer Sumpfvorlage gegebenenfalls mit Umpumpen bei gleichem Druck und gleicher Temperatur wie in der vierten Stufe in mindestens eine weiteren Reaktor, beispielsweise einen Scheiben- oder Korbreaktor, als Vakuumkammer gefördert und bei 250 bis 310°C, bevorzugt 250 bis 290°C, besonders bevorzugt 250 bis 280°C, bei Drucken von 1 bis 15 mbar absolut, vorzugsweise 2 bis 10 mbar absolut, bei Verweilzeiten von 30 bis 90 min, vorzugsweise 30 bis 60 min, weiter aufkondensiert werden. Das Oligocarbonat erreicht nun eine Lösungsviskosität von 1,13 bis 1,18, bevorzugt von 1,14 bis 1,16.

Außer aus den bereits genannten Reaktoren können die Vakuumkammern auch ausgewählt werden aus der Gruppe umfassend Rührkessel, Dünnschichtverdampfer, Fallfilmverdampfer, Rührkesselkaskade, Extruder, Kneter, Hochviskosreaktor nach EP460466A1, und Hochviskosscheibenreaktor.

Hat nun das Oligocarbonat die angestrebte Lösungsviskosität erreicht, wird der Mengenstrom dieses Oligocarbonats in mindestens zwei Teilmengenströme an Oligocarbonat aufgeteilt. Die Oligocarbonate in diesen mindestens zwei Teilmengenströmen werden nach der Aufteilung in mindestens zwei Teilmengenströme getrennt voneinander so weiterverarbeitet, dass mindestens zwei voneinander verschiedene Polycarbonate entstehen.

Nach der Aufteilung in mindestens zwei Teilmengenströme weist die Anlage daher mindestens zwei Stränge von Reaktoren auf, in denen mindestens zwei Teilmengenströme weiterverarbeitet werden. Die Reaktoren in den mindestens zwei Strängen von Reaktoren sind unabhängig voneinander ausgewählt aus der Gruppe umfassend Korbreaktoren, Hochviskosreaktor nach EP460466A1, Scheibenreaktoren, Hochviskosscheibenreaktoren, Extrusionsmaschinen wie Ein-, Zweiwellen-, Ring- oder Planetwalzenextrudern sowie Polymerknetern und Dünnschichtverdampfern. Bei dem Zweiwellenextruder kann es sich beispielsweise um einen Zweiwellenextruder der Firma Readco Kurimoto LLC handeln.

Bevorzugt werden Reaktoren eingesetzt, die für die Verarbeitung von hochviskosen Massen geeignet sind, die unter guter Durchmischung eine ausreichende Verweilzeit zur Verfügung stellen und die Oligocarbonate und die daraus entstehenden Polycarbonate dem erforderlichen Vakuum aussetzen. Die Viskositäten solcher hochviskosen Massen liegen dabei üblicherweise im Bereich von 1 bis 10.000 Pas, gemessen mit dem Fachmann bekannten handelsüblichen Viskosimetern wie beispielsweise Kapillar-, Platte-Kegel- oder Platte-Platte-Viskosimeter. In der Patentliteratur werden zahlreiche Reaktoren beschrieben, die diese Anforderungen grundsätzlich erfüllen und die erfindungsgemäß eingesetzt werden können. Beispielsweise können Reaktoren nach EP460466A1, EP528210A1, EP638354A1, EP715881A2, EP715882A2, EP798093A2 eingesetzt werden oder solche nach EP329092A1, nach EP517068A1, oder EP1436073A1 sowie solche nach EP222599A2.

Insbesondere bevorzugt wird ein Reaktor nach EP460466A1 eingesetzt, der sich kinematisch selbst reinigt, und aus zwei oder mehreren parallelen gleichsinnig rotierenden Wellen besteht, auf denen sich axial versetzte, nicht notwendigerweise kreisförmige Scheiben mit auf ihrem Umfang verteilten Abstreifern befinden, und einem umschließenden Gehäuse. Dieser Reaktor ist dadurch gekennzeichnet, dass alle Oberflächen der Abstreifer kinematisch gereinigt werden, dass insbesondere bei gleichschnell rotierenden Wellen in einem beliebigen Radialschnitt durch den Reaktor alle nach außen weisenden Flächen der Abstreifer eine Welle, falls sie vom Gehäuse gereinigt werden, konzentrisch zum Rotationsmittelpunkt sind, anderenfalls jedoch in etwa den Achsabstand als Krümmungsradius aufweisen und konvex sind und von ein benachbarten Welle oder deren Abstreifern gereinigt werden, dass insbesondere bei gleichschnell rotierenden Rotoren alle nach innen weisenden Flächen der Abstreifer einer Welle in einem beliebigen Radialschnitt durch den Reaktor in etwa den Achsabstand als Krümmungsradius aufweisen und konkav sind und von Abstreifern einer anderen benachbarten Welle gereinigt werden.

Die Oligocarbonate und die daraus entstehenden Polycarbonate können zur besseren Durchmischung über Mischelemente geführt werden. Beispielsweise kann nach der Aufteilung in mindestens zwei Teilmengenströme ein statischer oder dynamischer Mischer eingesetzt werden, beispielsweise im Nebenstrang zur verbesserten Einmischung des Co-Reaktanden oder der Co-Reaktanden. Sowohl die Oligocarbonate als auch die daraus entstehenden Polycarbonate liegen unter den bei der Herstellung vorliegenden Bedingungen als Schmelze vor.

In diesem statischen oder dynamischen Mischer kann auch die Zumischung des Co-Reaktanden oder der Co-Reaktanden erfolgen, die zur Herstellung eines Polycarbonats benötigt werden, das nicht ein unverzweigtes Homopolycarbonat auf Basis von Bisphenol A ist.

Dieses Polycarbonat ist, das nicht ein unverzweigtes Homopolycarbonat auf Basis von Bisphenol A ist, das also beispielsweise ein Polycarbonat ausgewählt aus der Gruppe umfassend ein verzweigtes Polycarbonat oder ein Copolycarbonat, vorzugsweise ausgewählt aus der Gruppe umfassend ein Block-Copolycarbonat, beispielsweise ein Siloxan-basiertes Block-Copolycarbonat oder ein Polyester-basiertes Block-Copolycarbonat, ein Polyestercarbonat oder ein Polycarbonat, das aus einem Diarylcarbonat, beispielsweise Diphenylcarbonat, und mindestens zwei verschiedenen Bisphenolen aufgebaut ist, beispielsweise Bisphenol A und Bisphenol TMC oder Bisphenol A und eines der weiter unten erläuterten Bisphenole der allgemeinen Formeln (IV) bis (VI).

Vorzugsweise wird nach der Aufteilung in mindestens zwei Teilmengenströme keinem der mindestens zwei Teilmengenströme ein Diarylcarbonat zugegeben. Damit wird verhindert, dass zuviel Hydroxyaryl, beispielsweise Phenol im Falle von Diphenylcarbonat als Diarylcarbonat, entsteht.

Wird in mindestens einem Strang von Reaktoren eine Polycarbonat-basierte Spezialität hergestellt, beispielsweise ein verzweigtes Polycarbonat oder ein Copolycarbonat, vorzugsweise ausgewählt aus der Gruppe umfassend ein Block-Copolycarbonat, beispielsweise ein Siloxan-basiertes Block-Copolycarbonat oder ein Polyester-basiertes Block-Copolycarbonat, ein Polyestercarbonat oder ein Polycarbonat, das aus einem Diarylcarbonat, beispielsweise Diphenylcarbonat, und mindestens zwei verschiedenen Bisphenolen aufgebaut ist, beispielsweise Bisphenol A und Bisphenol TMC oder Bisphenol A und eines der weiter unten erläuterten Bisphenole der allgemeinen Formeln (IV) bis (VI), und umfasst der betreffende Strang von Reaktoren einen Hochviskosreaktor, beispielsweise einen Hochviskosreaktor nach EP460466A1, wird zum Austragen des Copolycarbonats aus dem Hochviskosreaktor bevorzugt ein Einwellenextruder, ein Zweiwellenextruder oder eine Zahnradpumpe zum Einsatz. Gegebenenfalls werden noch Additive zugeführt und eingemischt. Die Additive können beispielsweise Produktionshilfsmittel, UV-Stabilisatoren, Farbmittel, beispielsweise Pigmente, Füllstoffe, Flammschutzmittel, Entformungsmittel, Antistatika, Fließverbesserer, Thermo- oder Verarbeitungsstabilisatoren sein.

Bei den Additiven kann es sich um übliche Polymeradditive, wie z.B. die in EP-A 0 839 623, WO-A 96/15102, EP-A 0 500 496 oder "Plastics Additives Handbook", Hans Zweifel, 5th Edition 2000, Hanser Verlag, München beschrieben sind, handeln.

Als Produktionshilfsmittel können beispielsweise Alkylphosphate, z. B. Mono-, Di- und Trihexylphosphat, Triisoctylphosphat und Trinonylphosphat. Bevorzugt wird als Alkylphosphat Triisooctylphosphat (Tris-2-ethyl-hexyl-phosphat) verwendet. Es können auch Mischungen aus verschiedenen Mono-, Di- und Trialkylphosphaten verwendet werden.

Entformungsmittel können beispielweise auf Basis eines Fettsäureesters aufgebaut sein, bevorzugt eines Stearinsäureesters, insbesondere bevorzugt auf Pentaerythritbasis. Ferner können Pentaerythrittetrastearat (PETS) und/oder Glycerinmonostearat (GMS) eingesetzt werden.

Mit Additiven sind ebenfalls Ultraviolett-Absorber gemeint. Geeignete Ultraviolett-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in den EP-A 0 839 623, WO-A 96/15102 und EP-A 0 500 496 beschrieben. Besonders geeignete Ultraviolett-Absorber sind Benzotriazole, Triazine, Benzophenone und/oder arylierte Cyanoacrylate. Folgende Ultraviolett-Absorber sind dabei insbesondere geeignet, wie z.B. Hydroxy-Benzotriazole, wie 2-(3',5'-Bis-(1,1-dimethylbenzyl)-2'-hydroxy-phenyl)-benzotriazol (Tinuvin® 234, BASF AG. Ludwigshafen), 2-(2'-Hydroxy-5'-(tert.-octyl)-phenyl)-benzotriazol (Tinuvin® 329, BASF AG. Ludwigshafen), Bis-(3-(2H-benztriazolyl)-2-hydroxy-5-tert.-octyl)methan, (Tinuvin® 360, BASF AG. Ludwigshafen), (2-(4,6-diphenyl-1,3,5-triazin-2-yl)-5-(hexyloxy)-phenol (Tinuvin® 1577, BASF AG. Ludwigshafen), sowie der Benzophenone 2,4-Dihydroxy-benzophenon (Chimasorb® 22 , BASF AG. Ludwigshafen) und 2-Hydroxy-4-(octyloxy)-benzophenon (Chimassorb® 81, BASF AG. Ludwigshafen), 2-Propenoic acid, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul® 3030, BASF AG Ludwigshafen), 2-[2-hydroxy-4-(2-ethylhexyl)oxy]phenyl-4,6-di(4-phenyl)phenyl-1,3,5-triazine (CGX UVA 006, BASF AG. Ludwigshafen) oder Tetra-ethyl-2,2'-(1,4-phenylene-dimethylidene)-bismalonate (Hostavin® B-Cap, Clariant AG).

Es können auch Mischungen dieser Ultraviolett-Absorber eingesetzt werden.

Als Thermo- bzw. Verarbeitungsstabilisator können Phosphite und Phosphonite sowie Phosphine eingesetzt werden. Beispiele sind Triphenylphosphit, Diphenylalkylphosphit, Phenyldialkylphosphit, Tris(nonylphenyl)phosphit, Trilaurylphosphit, Trioctadecyl phosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di- cumylphenyl)pentaerythritol diphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)- pentaerythritoldiphosphit, Bis(2,4,6-tris(tert-butylphenyl)pentaerythritoldiphosphit, Tristea-rylsorbitoltriphosphit, Tetrakis(2,4-di-tert-butylphenyl)-4,4'-biphenylen diphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8, 10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritol-diphosphit, Triphenylphosphin (TPP), Trialkylphenylphosphin, Bisdiphenylphosphino-ethan oder ein Trinaphthylphosphin. Insbesondere bevorzugt werden Triphenylphosphin (TPP), Irgafos® 168 (Tris(2,4-di-tert-butyl-phenyl)-phosphit) und Tris(nonylphenyl)phosphit oder deren Mischungen eingesetzt.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox® 1010 (Pentaerythrit- 3-(4-hydroxy-3,5-di-tert-butylphenyl)propionat; CAS: 6683-19-8) und Irganox 1076® (2,6-Di-tert-butyl-4-(octadecanoxycarbonylethyl)phenol) eingesetzt.

Die Einmischung der Additive kann in dem Austragsaggregat oder in einem nachgeschalteten Statikmischer erfolgen. Das Copolycarbonat wird über eine oder mehrere Düsen ausgeformt und mit einer Granuliervorrichtung nach dem Stand der Technik zerkleinert.

Es kann auch eine Kombination von oben genannten Maschinen eingesetzt werden. So kann beispielsweise zur Einmischung von Additiven ein Zweiwellenextruder eingesetzt werden, der dann mit dem oben genannten Hochviskosreaktor kombiniert wird.

Flüchtige niedermolekulare Spaltprodukte, die bei der weiteren Kondensation eines Oligocarbonats in ein Polycarbonat entstehen, und andere niedermolekulare Bestandteile können nach der Aufteilung in mindestens zwei Teilmengenströme genauso wie bis zur Aufteilung in mindestens zwei Teilmengenströme im Vakuum entfernt werden. Besonders bevorzugt geschieht dies in mehreren Vakuumstufen, wobei die erste Vakuumstufe in einem der mindestens zwei Stränge von Reaktoren nach Zusatz von weiteren Reaktanden wie Siloxanen, Verzweigern, Fettsäuren, Fettsäurenestern bevorzugt bei einem Absolutdruck von 5 bis 500 mbar und besonders bevorzugt bei einem Absolutdruck von 50 bis 100 mbar betrieben wird. Die Reaktion in einem Hochviskosreaktor wird ebenfalls unter Vakuum durchgeführt. Das Vakuum in den folgenden Vakuumstufen beträgt 0,001 mbar bis 50 mbar bevorzugt 0,005 mbar bis 40 mbar insbesondere bevorzugt 0,02 bis 30 mbar und ganz besonders bevorzugt 0,03 bis 5 mbar absolut.

Die mindestens zwei durch das erfindungsgemäße Schmelzeumesterungsverfahren erhaltenen verschiedenartigen Polycarbonate können einer weiteren Aufarbeitung unterzogen werden. Bei dieser Aufarbeitung kann es sich beispielsweise um eine Filtration oder um eine Tiefenfiltration handeln, wobei eine Schmelze des jeweils erhaltenen Polycarbonats über Filtermedien aus Faservliess oder Sintermaterial geleitet wird. Ferner kann die Schmelze des jeweils erhaltenen Polycarbonats beispielsweise über Seitenextruder mit Additiven versehen werden. Bei den Additiven kann es sich um die oben genannten Stoffe handeln. Bevorzugt können am Ende des Verfahrens ein oder mehrere Produktionshilfsmittel oder Inhibitoren zugegeben werden.

Bevorzugt wird der Teilmengenstrom an Oligocarbonat bzw. an daraus entstehendem Polycarbonat im Hauptstrang nach der Aufteilung in mindestens zwei Teilmengenströme nach einem ersten Reaktor, beispielsweise ein Mehrwellenextruder, insbesondere Zweiwellenextruder, auf einen zweiten großen Reaktor geleitet.

Dieser zweite Reaktor dieses Hauptstrangs kann beispielsweise ein Zweiwellenextruder sein oder als Scheiben- oder Korbreaktor ausgeführt sein, beispielsweise als Hochviskosreaktor nach EP460466A1, in welchem das in dem Hauptstrang befindliche Oligocarbonat zu einem Polycarbonat mit der gewünschten Endlösungsviskosität aufkondensiert wird. Die Temperaturen betragen 270 bis 330°C, bevorzugt 280 bis 320°C, besonders bevorzugt 280 bis 310°C, der Druck 0,01 bis 3 mbar, vorzugsweise 0,2 bis 2 mbar, bei Verweilzeiten von 60 bis 180 min, vorzugsweise 75 bis 150 min. Diese gewünschte Endlösungsviskosität ist größer 1,18 und beträgt bevorzugt von 1,181 bis 1,40, besonders bevorzugt 1,181 bis 1,36, ganz besonders bevorzugt 1,181 bis 1,34.

Die Brüden aus allen Verfahrensstufen werden unmittelbar abgeleitet, gesammelt und aufgearbeitet. Diese Aufarbeitung erfolgt in der Regel destillativ, um hohe Reinheiten der rückgewonnenen Stoffe zu erreichen. Dies kann beispielsweise gemäß EP1221454A1 erfolgen. Eine Rückgewinnung und Isolierung der abgespaltenen Monohydroxyarylverbindung in reinster Form ist aus ökonomischer und ökologischer Sicht selbstverständlich. Die Monohydroxyarylverbindung kann direkt zur Herstellung einer Dihydroxyarylverbindung oder eines Diarylcarbonats verwendet werden.

Die Scheiben- oder Korbreaktoren zeichnen sich dadurch aus, dass sie bei hohen Verweilzeiten eine sehr große, sich ständig erneuernde Oberfläche am Vakuum bereitstellen. Die Scheiben- oder Korbreaktoren sind entsprechend den Schmelzviskositäten der Produkte geometrisch ausgebildet. Geeignet sind beispielsweise Reaktoren, wie sie in der und EP1253163A1, oder Zweiwellenreaktoren, wie sie in der WO99/28370A1 beschrieben sind.

Die Oligocarbonate und die daraus entstehenden Polycarbonate werden in der Regel mittels Zahnradpumpen, Schnecken unterschiedlichster Bauart oder Verdrängerpumpen spezieller Bauart gefördert.

Besonders geeignete Werkstoffe zur Herstellung der Apparate, Reaktoren, Rohrleitungen, Pumpen und Armaturen sind nicht rostende Stähle vom Typ Cr Ni (Mo) 18/10 wie z.B. 1.4571, 1.4404 oder 1. 4541 (Nomenklatur nach EN 10027-2 siehe Stahlschlüssel 2001, Verlag: Stahlschlüssel Wegst GmbH, Th-Heuss-Straße 36, D-71672 Marbach) für Bauteile mit geringeren Anforderungen an die Härte sowie 1.4112, 1.4313 oder 1.4418 für Bauteile mit erhöhten Anforderungen an die Härte und Ni-Basislegierungen vom Typ C, wie z.B. 2.4605 oder 2.4610 (Stahlschlüssel 2001, Verlag: Stahlschlüssel Wegst GmbH, Th-Heuss-Straße 36, D-71672 Marbach). Die nicht rostenden Stähle werden bis zu Verfahrenstemperaturen von etwa 290°C und die Ni-Basislegierungen bei Verfahrenstemperaturen oberhalb von etwa 290°C benutzt.

Bevorzugt ist der Durchsatz an Oligocarbonat bzw. an daraus entstehendem Polycarbonat in diesem mindestens zweiten Strang von Reaktoren geringer als der Durchsatz an Oligocarbonat bzw. an daraus entstehendem Polycarbonat im Hauptstrang von Reaktoren.

Da der Durchsatz an Oligocarbonat bzw. an daraus entstehendem Polycarbonat in dem mindestens zweiten Strang von Reaktoren geringer ist als der Durchsatz an Oligocarbonat und an daraus entstehendem Polycarbonat im Hauptstrang von Reaktoren ist das Volumen der Reaktoren im mindestens zweiten Strang von Reaktoren geringer als das Volumen der entsprechenden Reaktoren im Hauptstrang von Reaktoren, d.h. die Kapazität der Reaktoren ist entsprechend des geringeren Durchsatzes skaliert.

Mit dem erfindungsgemäßen Schmelzeumesterungsverfahren ist es auch möglich, oligomere Reaktanden in ein schon vorliegendes Oligocarbonat einzukondensieren. Im Stand der Technik wird der Aufbau der Polymere ausgehend von den Monomeren bevorzugt in nur einem Strang von Reaktoren durchgeführt.

Polycarbonate, die mittels des erfindungsgemäßen Verfahrens hergestellt werden können, sind bevorzugt ausgewählt aus der Gruppe umfassend unverzweigte Homopolycarbonate auf Basis von Bisphenol A, verzweigte Polycarbonate oder Copolycarbonate, vorzugsweise ausgewählt aus der Gruppe umfassend Block-Copolycarbonate, beispielsweise ein Siloxan-basiertes Block-Copolycarbonat oder ein Polyester-basiertes Block-Copolycarbonat, Polyestercarbonate oder Polycarbonate, die aus einem Diarylcarbonat, beispielsweise Diphenylcarbonat, und mindestens zwei verschiedenen Bisphenolen aufgebaut sind, beispielsweise Bisphenol A und Bisphenol TMC oder Bisphenol A und eines der weiter unten erläuterten Bisphenole der allgemeinen Formeln (IV) bis (VI).

Dabei wird bevorzugt in einem der mindestens zwei zueinander parallel geschalteten Strängen von Reaktoren ein unverzweigtes Homopolycarbonat mit einer Monomereinheit beruhend auf Bisphenol A hergestellt, besonders bevorzugt in dem Strang von Reaktoren, der den größten Durchsatz aufweist.

Entsprechend wird ein Polycarbonat ausgewählt aus der Gruppe umfassend ein verzweigtes Polycarbonat oder ein Copolycarbonat, vorzugsweise ausgewählt aus der Gruppe umfassend ein Block-Copolycarbonat, beispielsweise ein Siloxan-basiertes Block-Copolycarbonat oder ein Polyester-basiertes Block-Copolycarbonat, ein Polyestercarbonat oder ein Polycarbonat, das aus einem Diarylcarbonat, beispielsweise Diphenylcarbonat, und mindestens zwei verschiedenen Bisphenolen aufgebaut ist, beispielsweise Bisphenol A und Bisphenol TMC oder Bisphenol A und eines der weiter unten erläuterten Bisphenole der allgemeinen Formeln (IV) bis (VI), auf einem Strang von Reaktoren hergestellt, der einen geringeren Durchsatz hat als der Strang von Reaktoren, in dem ein unverzweigtes Homopolycarbonat mit einer Monomereinheit beruhend auf Bisphenol A hergestellt wird.

Die Herstellung von aromatischen Polycarbonaten im Schmelzeumesterungsverfahren ist bekannt und beispielsweise beschrieben in "Schnell", Chemistry and Physics of Polycarbonates, Polymer Reviews, Vol. 9, Interscience Publishers, New York, London, Sydney 1964, in D.C. Prevorsek, B.T. Debona and Y. Kersten, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), in D. Freitag, U. Grigo, P.R. Muller, N. Nouvertne, BAYER AG, "Polycarbonates" in Encyclopedia of Polymere Science and Engineering, Vol. 1 1, Second Edition, 1988, pages 648-718 und weiterhin in Dr. U. Grigo, K. Kircher and P.R. Muller "Polycarbonate" in Becker/Braun, Kunststoff-Handbuch [Plastics Handbook], Volume 3/1, Polycarbonate, Polyacetale, Polyester, Celluloseester [Polycarbonates, polyacetals, polyesters, cellulose esters], Carl Hanser Verlag, Munich, Vienna 1992, pages 117-299.

Für das erfindungsgemäße Schmelzeumesterungsverfahren geeignete Bisphenole sind Dihydroxydiarylverbindungen der Formel (I) und die aus diesen Dihydroxydiarylverbindungen hergestellten Oligomere,

**HO-Z-OH** (III)

worin Z ein divalenter organischer Rest mit 6 bis 30 Kohlenstoffatomen ist, der eine oder mehrere aromatische Gruppen enthält. Beispiele solcher Verbindungen, sind Dihydroxydiarylverbindugen wie Hydrochinon, Resorcin, Dihydroxydiphenyl, Bis-(hydroxyphenyl)-alkane, Bis(hydroxyphenyl)-cycloalkane, Bis-(hydroxyl-phenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Bisphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan (Bisphenol A (BPA)), 2,4-Bis-(4-hydroxyphenyl)-2-methylbutan, 1,3-Bis-[2-(4-hydroxyphenyl)-2-propyl]-benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol, 1,1-Bis-(4-hydroxyphenyl)-cyclohexan und 1,1-Bis-(4-hydroxyphenyl)-3,3,5-trimethylcyclohexan (Bisphenol TMC (BPTMC)), sowie die Bisphenole der Formeln (IV) bis (VI) 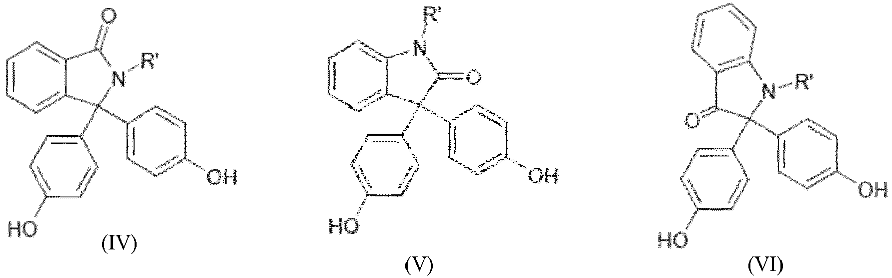 in denen R' jeweils für C₁-C₄-Alkyl, Aralkyl oder Aryl, bevorzugt für Methyl oder Phenyl steht.

Besonders bevorzugte Bisphenole sind 4,4'-Dihydroxydiphenyl, 1,1-Bis-(4-Hydroxyphenyl)-phenylethan, 2,2-Bis-(4-hydroxyphenyl)-propan (Bisphenol A (BPA)), 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC (BPTMC)) und die Dihydroxyverbindungen der Formeln (IV), (V) und (VI), in denen R' jeweils für C₁-C₄-Alkyl, Aralkyl oder Aryl, bevorzugt für Methyl oder Phenyl steht.

Darüber hinaus sind geeignete Bisphenole beispielsweise in den US 2,999,835 A, US 3,148,172 A, US 2,991,273 A, US 3,271,367 A, US 4,982,014 A und US 2,999,846 A, in den deutschen Offenlegungsschriften DE 15 70 703 A, DE 20 63 050 A, DE 20 36 052 A, DE 22 11 956 A und DE 38 32 396 A, der französischen Patentschrift FR 1 561 518 A, in der Monographie von H. Schnell, Chemistry and Physics of Polycarbonates, Interscience Publishers, New York 1964, S. 28ff ; S.102ffund von D.G. Legrand, J.T. Bendler, Handbook of Polycarbonate Science and Technology, Marcel Dekker New York 2000, S. 72ff., beschrieben.

Es sei hier betont, dass das erfindungsgemäße Schmelzeumesterungsverfahren praktisch für alle bekannten Bisphenole eingesetzt werden kann. Dabei können die verwendeten Bisphenole, wie auch alle anderen der Synthese zugesetzten Chemikalien und Hilfsstoffe mit den aus ihrer eigenen Synthese, Handhabung und Lagerung stammenden Verunreinigungen kontaminiert sein, obwohl es wünschenswert ist, mit möglichst sauberen Rohstoffen zu arbeiten.

Diarylcarbonate, die im erfindungsgemäßen Verfahrens eingesetzt werden können, sind Di-C6-C14-Arylester, vorzugsweise die Diester von Phenol oder substituierten Phenolen, also Diphenylcarbonat oder beispielsweise Bissalicylcarbonat. Bezogen auf 1 Mol Diphenol werden die Diarylcarbonate in 1,01 bis 1,30 Mol, bevorzugt in 1,02 bis 1,15 Mol eingesetzt.

Es ist darauf zu achten, dass die Reaktanden wie beispielsweise die Bisphenole und die Diarylcarbonate frei von Alkali und Erdalkaliionen sind, wobei Mengen von kleiner 0,1 ppm an Alkali- und Erdalkaliionen toleriert werden können. Derart reine Bisphenole bzw. Diarylcarbonate sind erhältlich, indem man die Bisphenole bzw. Diarylcarbonate umkristallisiert, wäscht oder destilliert. Beim erfindungsgemäßen Schmelzeumesterungsverfahren soll der Gehalt an Alkali- und Erdalkalimetallionen sowohl im Bisphenol als auch im Diarylcarbonat einen Wert von < 0,1 ppm betragen.

Es ist vorteilhaft, die aus der Umesterung des Bisphenols und des Diarylcarbonats zum Polycarbonat abgespaltenen und isolierten Monophenole vor dem Einsatz in die Diarylcarbonatsynthese aufzureinigen. Die Rohmonophenole, die beim Schmelzeumesterungsverfahren isoliert werden, können je nach Umesterungsbedingungen und Destillationsbedingungen u.a. mit Diarylcarbonaten, dem Bisphenol, Salicylsäure, Isopropenylphenol, Phenoxybenzoesäurephenylester, Xanthon, dem Hydroxymonoarylcarbonat verunreinigt sein. Die Reinigung kann nach den üblichen Reinigungsverfahren, also beispielsweise Destillation oder Umkristallisation erfolgen. Die Reinheit der Monophenole liegt dann bei > 99 %, bevorzugt bei > 99,8 %, besonders bevorzugt bei > 99,95 %.

Katalysatoren im Sinne des erfindungsgemäßen Schmelzeumesterungsverfahren für die Umesterung sind ausgewählt aus ein oder mehreren der Gruppe umfassend alle anorganischen oder organischen basischen Verbindungen beispielsweise Lithium-, Natrium-, Kalium-, Cäsium-, Calzium-, Barium-, Magnesium-, -hydroxide, -carbonate, -halogenide, -phenolate, -diphenolate, - fluoride, -acetate, -phosphate, -hydrogenphosphate, -boranate, Stickstoff- und Phosphorbasen wie beispielsweise Tetramethylammoniumhydroxid, Tetramethylammoniumacetat, Tetramethylammoniumfluorid, Tetramethylammoniumtetraphenylboranat, Tetraphenylphosphoniumfluorid, Tetra-phenylphosphoniumtetraphenylboranat, Dimethyldiphenylammoniumhydoxid, Tetraethylammoniumhydroxid, Cethyltrimethylammoniumtetraphenylboranat, Cethyltrimethylammoniumphenolat, Diazabicycloundecen (DBU), Diazabicylononen (DBN) oder Guanidinsysteme wie beispielsweise das 1,5,7-Triazabicyclo-[4,4,0]-dec-5-en, 7-Phenyl-1,5,7-triazabicyclo-[4,4,0]-dec-5-en, 7-Methyl-1,5,7-triazabicyclo-[4,4,0]-dec-5-en, 7,7'-Hexylidendi-1,5,7-triazabi-cyclo-[4,4,0]-dec-5-en, 7,7'-Decylidendi-1,5,7-triazabicyclo-[4,4,0]-dec-5-en, 7,7'-Dodecyliden-di-1,5,7-tri-aza-bicyclo-[4,4,0]-dec-5-en oder Phosphazene wie beispielsweise die Phosphazen-Base P1-t-Oct = tert.-Octyl-imino-tris-(dimethylamino)-phosphoran, Phosphazen-Base P1-t-Butyl = tert.-Butyl-imino-tris-(dimethylamino)-phosphoran, BEMP = 2-tert.-Butylimino-2-diethylamino-1,3-dimethyl-perhydro-1,3,2-diaza-2-phos-phoran.

Insbesondere geeignet sind Phosphoniumkatalysatoren der Formel (VII): 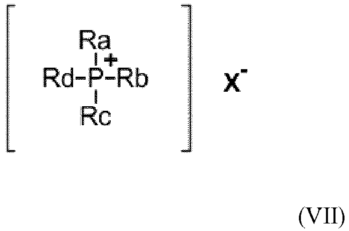 wobei Ra, Rb, Rc und Rd dieselben oder verschiedene C1-C10-Alkyle, C6-C14-Aryle, C7-C15-Arylalkyle oder C5-C6-Cycloalkyle, bevorzugt Methyl oder C6-C14-Aryle, besonders bevorzugt Methyl oder Phenyl sein können, und X- ein Anion wie Hydroxyd, Sulfat, Hydrogensulfat, Hydrogencarbonat, Carbonat oder ein Halogenid, bevorzugt Chlorid oder ein Alkylat bzw. Arylat der Formel -OR sein kann, wobei R ein C6-C14-Aryl, C7-C15-Arylalkyl oder C5-C6-Cycloalkyl, bevorzugt Phenyl sein kann.

Besonders bevorzugte Katalysatoren sind Tetraphenylphosphoniumchlorid, Tetraphenylphosphoniumhydroxid und Tetraphenylphosphoniumphenolat; ganz besonders bevorzugt ist Tetraphenylphosphoniumphenolat.

Diese Katalysatoren werden in Mengen von 10<-2> bis 10<-8> Mol, bezogen auf 1 Mol Bisphenol, eingesetzt.

Beim Einsatz von Alkali-/Erdalkali-Metallkatalysatoren kann es vorteilhaft sein, die Alkali-/ Erdalkali-Metallkatalysatoren zu einem späteren Zeitpunkt, beispielsweise nach der Aufteilung in mindestens zwei Teilmengenströme, zuzusetzen. Die Zugabe des Alkali-/Erdalkali-Metallkatalysators kann beispielsweise als Feststoff oder als Lösung in, Phenol, Oligocarbonat oder Polycarbonat erfolgen.

Die Mitverwendung von Alkali- bzw. Erdalkali-Metallkatalysatoren widerspricht nicht der vorstehend erwähnten Forderung nach Reinheit der Reaktionspartner.

Allerdings wäre es auch vorteilhaft, auf die Mitverwendung von Alkali- bzw. Erdalkali-Metallkatalysatoren verzichten zu können, da dadurch verhindert werden kann, dass Alkali- bzw. Erdalkali-Metallkatalysatoren zu unerwünschten Nebenreaktionen führen, wie beispielsweise das Entstehen von höheren Mengen an Fries-Verzweigungen, die zu einer höheren Schmelzviskosität und auch einer höheren Menge an Gelteilchen führen.

In einer besonderen Ausführungsform der vorliegenden Erfindung werden mindestens einem der Teilmengenströme nach der Aufteilung des Mengenstroms in Teilmengenströme, und nach Erreichen, aber vor einer Strangabspinnung, der gewünschten Endlösungsviskosität des Polycarbonats, Blendpartner und/oder sensible Zuschlagstoffe zugegeben.

Als Blendpartner eignen sich thermoplastische Polyester wie sie in Houben-Weyl, Band E20/Teil 2, 4.Aufl. 1987, Georg Thieme Verlag, Seite 1411-1413 und 1418-1422 beschrieben sind, vorzugsweise Polyethylenterephthalat und Polybutylenterephthalat.

Weitere Blendpartner sind thermoplastische Materialien, wie sie z. B. in Houben- Weyl, Band E20/Teil 2, 4.Aufl., 1987, Georg Thieme Verlag, Seite 689-1255 beschrieben sind.

Als Blendpartner eignen sich bevorzugt kautschukmodifizierte Vinyl(co)polymerisate und/oder weitere Elastomere. Besonders bevorzugte kautschukmodifizierte Vinyl(co)polymerisate sind beispielsweise ABS-Polymerisate (Emulsions-, Masse- und Suspensions-ABS).

Die sensiblen Zuschlagstoffe sind dabei ausgewählt aus einem oder mehreren der Gruppe bestehend aus: anorganischen Füllstoffe, beispielsweise Talk, Titandioxid oder Pigmente, Antistatika, beispielsweise aus der Gruppe der P- oder N-Salze, ionische Flüssigkeiten, Fließhilfsmittel, beispielsweise aus der Klasse der Glyceride oder Diglyceride, Produktionshilfsmittel, beispielsweise Polyether.

Auf diese Weise können die Blendpartner und/oder die sensiblen Zuschlagstoffe unter geringerer thermischer Belastung eingebracht werden.

Auch braucht nach Erhalt des Polycarbonats mit der gewünschten Endlösungsviskosität dieses nicht mehr aufgeschmolzen werden muss, um die Blendpartner und/oder sensiblen Zuschlagstoffe einzubringen. So kann dann beispielsweise auch ein möglicher nachfolgender Compoundierschritt gespart werden.

In einer weiteren besonderen Ausführungsform der vorliegenden Erfindung werden einem ersten Teilmengenstrom der mindestens zwei Teilmengenströme nach der Aufteilung des Mengenstroms in Teilmengenströme, aber vor Erreichen der gewünschten Endlösungsviskosität, ein oder mehrere der Co-Reaktanden zugefügt, und dieser erste Teilmengenstrom wieder mit einem anderen, zweiten Teilmengenstrom der mindestens zwei Teilmengenströme vereinigt, und zwar bevor weder das Polycarbonat im ersten Teilmengenstrom der mindestens zwei Teilmengenströme noch das Polycarbonat im zweiten Teilmengenstrom der mindestens zwei Teilmengenströme die gewünschte Lösungsviskosität erreicht hat.

Auf diese Weise wird die noch hohe Reaktivität der Oligocarbonate bzw. der daraus entstehenden Polycarbonate ausgenutzt, die beispielsweise noch mehr freie OH-Gruppen und noch mehr Katalysator aufweisen als ein Polycarbonat, das bereits die gewünschte Endlösungsviskosität erreicht hat. Dadurch wiederum kann die Anzahl der freien OH-Gruppen reguliert werden; insbesondere kann dadurch die Anzahl der freien OH-Gruppen verringert werden. Dies ist in aller Regel erwünscht, da freie OH-Gruppen zur Vergilbung des Polycarbonats führen können.

In einer möglichen erfindungsgemäßen Ausgestaltung kann das erfindungsgemäße Verfahren über ein computergesteuertes Mess- und Regelsystem ausgeführt und/oder gesteuert werden. Das computergesteuerte Mess- und Regelsystem gemäß der vorliegenden Erfindung kann Hardware- und/oder Software-Komponenten umfassen. Das computergesteuerte Mess- und Regelsystem kann beispielsweise mindestens einen Speicher mit Programmanweisungen eines Computerprogramms und mindestens einen Prozessor ausgebildet zum Ausführen von Programmanweisungen aus dem mindestens einen Speicher umfassen. Dementsprechend soll gemäß der vorliegenden Erfindung auch eine Vorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, ein Ausgabemodul oder ein Sensormodul zu veranlassen, das erfindungsgemäße Verfahren auszuführen und/oder zu steuern.

Alternativ oder zusätzlich kann das computergesteuerte Mess- und Regelsystem ferner einen oder mehrere Sensoren und/oder eine oder mehrere Kommunikationsschnittstellen umfassen.

Unter einer Kommunikationsschnittstelle soll beispielsweise eine drahtlose Kommunikationsschnittstelle und/oder eine drahtgebundene Kommunikationsschnittstelle verstanden werden.

Eine drahtlose Kommunikationsschnittstelle ist beispielsweise eine Kommunikationsschnittstelle gemäß einer drahtlosen Kommunikationstechnik. Ein Beispiel für eine drahtlose Kommunikationstechnik ist eine lokale Funknetztechnik wie Radio Frequency Identification (RFID) und/oder Near Field Communication (NFC) und/oder Bluetooth (z.B. Bluetooth Version 2.1 und/oder 4.0) und/oder Wireless Local Area Network (WLAN). RFID und NFC sind beispielsweise gemäß den ISO-Standards 18000, 11784/11785 und dem ISO/IEC-Standard 14443-A und 15693 spezifiziert. WLAN ist zum Beispiel in den Standards der IEEE-802.11-Familie spezifiziert. Ein weiteres Beispiel für eine drahtlose Kommunikationstechnik ist eine überörtliche Funknetztechnik wie beispielsweise eine Mobilfunktechnik, zum Beispiel Global System for Mobile Communications (GSM) und/oder Universal Mobile Telecommunications System (UMTS) und/oder Long Term Evolution (LTE). Die GSM-, UMTS- und LTE-Spezifikationen werden von dem 3rd Generation Partnership Project (3GPP) gepflegt und entwickelt.

Eine drahtgebundene Kommunikationsschnittstelle ist beispielsweise eine Kommunikationsschnittstelle gemäß einer drahtgebundenen Kommunikationstechnik. Beispiele für eine drahtgebundene Kommunikationstechnik sind ein Local Area Network (LAN) und/oder ein Bus-System, zum Beispiel ein Controller-Area-Network-Bus (CAN-Bus) und/oder ein universeller serieller Bus (USB). CAN-Bus ist beispielsweise gemäß dem ISO-Standard ISO 11898 spezifiziert. LAN ist zum Beispiel in den Standards der IEEE-802.3-Familie spezifiziert. Es versteht sich, dass das Ausgabemodul und/oder das Sensormodul auch andere nicht aufgeführte Mittel umfassen können.

Des Weiteren wird gemäß der vorliegenden Erfindung ein Computerprogramm offenbart, umfassend Programmanweisungen, die dazu ausgebildet sind, eine Vorrichtung zur Ausführung und/oder Steuerung des erfindungsgemäßen Verfahrens zu veranlassen, wenn das Computerprogramm durch einen Prozessor ausgeführt wird.

Ferner wird ein computerlesbares Speichermedium offenbart, welches ein Computerprogramm gemäß der vorliegenden Erfindung enthält. Ein computerlesbares Speichermedium kann zum Beispiel als magnetisches, elektrisches, elektro-magnetisches, optisches und/oder andersartiges Speichermedium ausgebildet sein. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nicht-flüchtige Speicher mit wahlfreiem-Zugriff (RAM) wie zum Beispiel NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Servervorrichtung (aus)gelesen und/oder beschrieben werden kann, beispielsweise von einem Prozessor.

Unter dem Begriff Steuerung wird im Rahmen der vorliegenden Erfindung im Allgemeinen ein Beeinflussen eines oder mehrerer Produktionsparameter über eine oder mehrere Vorrichtungen verstanden. Ein solches Steuern ist von einem Regeln bzw. einer Regelung in Abhängigkeit des Ergebnisses eines Vergleichs zwischen einem Ist-Wert und einem Sollwert umfasst und bei z. B. ein gesteuerter Produktionsparameter wiederrum Einfluss auf eine weitere Iteration des derart geregelten Produktionsparameters hat. Beispielsweise kann ein Vergleich zwischen zwei oder mehr an verschiedenen Stellen der Produktionsanlage gemessenen Lösungsviskositäten erfolgen.

Die Erfindung soll durch die nachfolgenden Beispiele und Figuren erläutert werden, ohne dass die Erfindung auf diese Beispiele und Figuren eingeschränkt werden soll. Dabei kommen die hier beschriebenen Bestimmungsmethoden für alle korrespondierenden Größen in der vorliegenden Erfindung zur Anwendung, sofern nichts Gegenteiliges beschrieben worden ist.

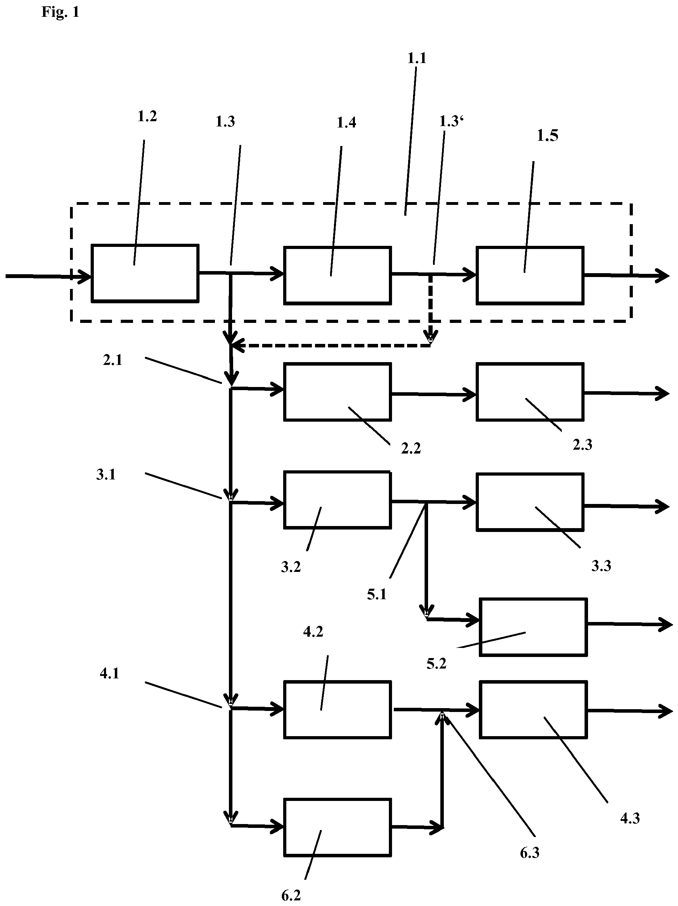

Figur 1 zeigt in schematischer Darstellung eine Produktionsanlage zur Durchführung des erfindungsgemäßen Verfahrens zur kontinuierlichen gleichzeitigen Herstellung eines ersten Polycarbonats und mindestens eines zweiten Polycarbonats nach dem Schmelzeumesterungsverfahren.

Dabei sind:
- 1.1: Hauptstrang von Reaktoren
- 1.2: ein Reaktor vor der Aufteilung in Teilmengenströme
- 1.3: erste Aufteilung in Teilmengenströme in einer ersten Ausführungsform
- 1.3': erste Aufteilung in Teilmengenströme in einer zweiten Ausführungsform
- 1.4: ein erster Reaktor des Hauptstrangs von Reaktoren nach der Aufteilung in Teilmengenströme
- 1.5: ein zweiter Reaktor des Hauptstrangs von Reaktoren nach der Aufteilung in Teilmengenströme
- 2.1: zweite Aufteilung in Teilmengenströme
- 2.2: ein erster Reaktor eines ersten Nebenstrangs
- 2.3: ein zweiter Reaktor eines ersten Nebenstrangs
- 3.1: dritte Aufteilung in Teilmengenströme
- 3.2: ein erster Reaktor eines zweiten Nebenstrangs
- 3.3: ein zweiter Reaktor eines zweiten Nebenstrangs
- 4.1: vierte Aufteilung in Teilmengenströme
- 4.2: ein erster Reaktor eines dritten Nebenstrangs
- 4.3: ein zweiter Reaktor eines dritten Nebenstrangs
- 5.1: fünfte Aufteilung in Teilmengenströme
- 5.2: ein erster Reaktor eines vierten Nebenstroms
- 6.2: ein erster Reaktor eines fünften Nebenstrangs
- 6.3: Rückführung des fünften Nebenstroms in den dritten Nebenstrom

Die dicken Pfeile zeigen dabei die Strömungsrichtung des Oligo- bzw. des daraus entstehenden Polycarbonats an.

### Schmelzvolumenrate (MVR)

Die Bestimmung des Schmelzvolumenrate (MVR) erfolgt soweit nicht anders angegeben nach ISO 1133 (Jahr 2011) (bei 300 °C; 1,2 kg Belastung) soweit keine anderen Bedingungen beschrieben worden sind.

### Lösungsviskosität

Wie bereits weiter oben beschrieben wird die Lösungsviskosität in Dichlormethan bei einer Konzentration von 5 g/l bei 25 °C mit einem Ubbelohdeviskosimeter bestimmt.

### Ausgangsstoffe:

### Rohstoff A: Polycarbonat oder Oligocarbonat

### Polycarbonat 1:

Es wird ein lineares Bisphenol-A-Polycarbonat mit Endgruppen basierend auf Phenol mit einem Schmelzvolumenindex von 59 - 62 cm³/10 min gemessen bei 300 °C und 1,2 kg Belastung (gemäß ISO 1033) sowie einer Lösungsviskosität von ca. 1,205 eingesetzt. Dieses Polycarbonat enthält keine Additive wie beispielsweise die oben beschriebenen Additive mit einem Anteil von größer 10 ppm. Die Herstellung des Polycarbonats erfolgte über einen Schmelzeumesterungsverfahren wie in WO2009127366A1 beschrieben. Das Polycarbonat weist einen Phenolgehalt von 108 ppm, einen Bisphenol-A Gehalt von 29 ppm, einen Diphenylcarbonatgehalt von 500 ppm auf (jeweils bestimmt mittels HPLC), einen Gehalt an phenolischen OH-Endgruppen von ca. 700 ppm auf (bestimmt mittels IR-Spektroskopie). Dieses Polycarbonat stellt das Endprodukt dar.

### Oligocarbonat 2:

Es wird ein lineares Bisphenol-A-Oligocarbonat mit Endgruppen basierend auf Phenol mit einer Lösungsviskosität von 1,059 eingesetzt. Dieses Oligocarbonat enthält keine Additive wie beispielsweise die oben beschriebenen Additive mit einem Anteil von größer 10 ppm. Das Oligocarbonat weist einen Phenolgehalt von 0,79 Gew.-% einen Bisphenol-A-Gehalt von 0,44 Gew.-% sowie einen Diphenylcarbonatgehalt von 0,76 Gew.-% auf (bestimmt mittels HPLC). Der Gehalt an phenolischen OH-Endgruppen beträgt ca. 0,88 Gew.-% (bestimmt mittels IR-Spektroskopie). Ein solches Oligocarbonat ist im erfindungsgemäßen Schmelzeumesterungsverfahren beispielsweise erhältlich unmittelbar vor der Aufteilung in mindestens zwei Teilmengenströme.

### Oligocarbonat 3:

Es wird ein lineares Bisphenol-A- Oligocarbonat mit Endgruppen basierend auf Phenol der Firma Covestro Deutschland AG mit einer Lösungsviskosität von 1,169 gemessen eingesetzt. Dieses Oligocarbonat enthält keine Additive wie beispielsweise die oben beschriebenen Additive mit einem Anteil von größer 10 ppm. Das Oligocarbonat weist einen Phenolgehalt 275 ppm einen Bisphenol-A Gehalt von 124 ppm sowie einen Diphenylcarbonatgehalt von 533 ppm auf (bestimmt mittels HPLC). Der Gehalt an phenolischen OH-Endgruppen beträgt ca. 0,16 Gew.-% (bestimmt mittels IR-Spektroskopie). Ein solches Oligocarbonat ist im erfindungsgemäßen Schmelzeumesterungsverfahren beispielsweise ebenfalls erhältlich unmittelbar vor der Aufteilung in mindestens zwei Teilmengenströme. Im Unterschied zur Herstellung von Oligocarbonat 2 befindet sich die Aufteilung in mindestens zwei Teilmengenströme bei der Herstellung von Oligocarbonat 3 zu einem späteren Zeitpunkt und damit auch bei weiterem Fortschritt der Polykondensation statt.

### Rohstoff B: 1,1,1,-Tris(4-hydroxyphenyl)ethan (THPE)

90 Gew.-% Polycarbonatgranulat (Polycarbonat 1) werden mit 10 Gew.-% 1,1,1,-Tris(4-hydroxyphenyl)ethan vermischt und auf einem Kleincompounder bei einer Temperatur von 260 °C. compoundiert.

### Rohstoff C: Siloxan

Die Herstellung der Siloxane ist beispielsweise in WO2015052229A1 beschrieben.

### Siloxan 1:

Bisphenol A-terminertes Polydimethylsiloxan mit einer Viskosität im Bereich von 400 bis 500 mPa·s (23°C) nach DIN 53019; der Natrium-Gehalt beträgt ca. 2 ppm.

### Siloxan 2:

Bisphenol A-terminertes Polydimethylsiloxan mit einer Viskosität im Bereich von 400 bis 500 mPa·s (23°C) nach DIN 53019; der Natrium-Gehalt beträgt < 0,1 ppm.

Ausführungsbeispiel 2 stellt die erfindungsgemäße Kombination der Verfahrensschritte dar, in dem ein Oligocarbonatstrom erhalten unmittelbar vor der Aufteilung in mindestens zwei Teilmengenströme einer weiteren Umsetzung mit einem Reaktanden zugeführt wird, zur Simulation einer Umsetzung des Oligocarbonats in einem zweiten Strang von Reaktoren nach der Aufteilung in mindestens zwei Teilmengenströme.

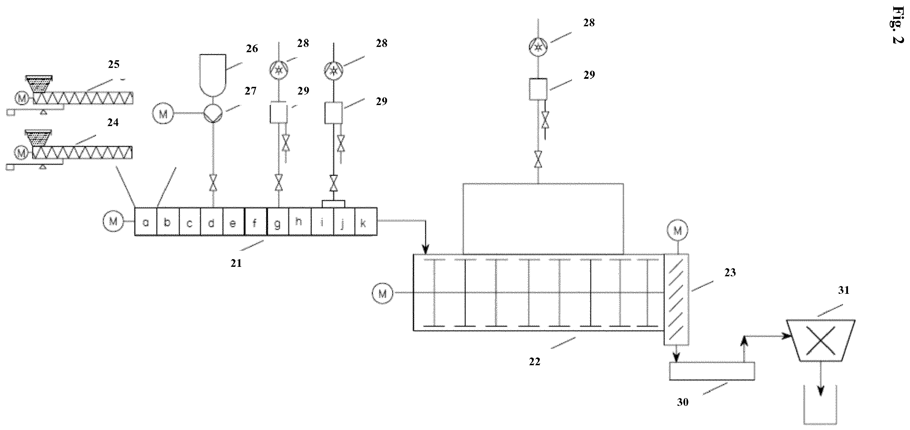

Ausführungsbeispiel 4 stellt ebenfalls die erfindungsgemäße Kombination der Verfahrensschritte dar, in dem ein Oligocarbonatstrom erhalten unmittelbar vor der Aufteilung in mindestens zwei Teilmengenströme einer weiteren Umsetzung mit einem Reaktanden wie in Fig. 2 gezeigt zugeführt wird zur Simulation einer Umsetzung des Oligocarbonats in einem zweiten Strang von Reaktoren nach der Aufteilung in mindestens zwei Teilmengenströme.

Ausführungsbeispiele 1 und 3 gehen von einem Polycarbonat aus, welches nach einem Schmelzeumesterungsverfahren wie in WO2009127366A1 beschrieben hergestellt wurde.

### Beispiel 1 (Vergleichsbeispiel):

In einem 250 ml Glaskolben mit Rührer und Kurzwegabscheider werden 14,0 g Polycarbonatgranulat Polycarbonat 1, sowie 2,5 g THPE-Abmischung (Rohstoff B; entsprechend 1,5 Gew.-% THPE) eingewogen. Die Apparatur wird evakuiert und mit Stickstoff belüftet (jeweils dreimal). Die Mischung wird durch ein auf 290 °C vorgeheiztes Metallbad innerhalb von 10 Minuten unter Normaldruck aufgeschmolzen. Das Reaktionsgemisch wird für weitere 5 Minuten unter Normaldruck gerührt. Danach wird Vakuum angelegt bis der Druck in der Apparatur ca. 1,5 mbar beträgt. Das Reaktionsgemisch wird für 10 Minuten unter Rühren bei diesem Vakuum gehalten. Danach wird mit Stickstoff belüftet und die Polycarbonatschmelze entnommen. Man erhält ein transparentes Polycarbonat.

Eine Probe des auf diese Weise erhaltenen Polycarbonats wird in Dichlormethan gelöst. Dabei werden unlösliche Bestandteile festgestellt (Gelkörper). Die Lösungsviskosität konnte aufgrund der unlöslichen Bestandteile nicht gemessen werden.

### Beispiel 2 (erfindungsgemäß):

In einem 250 ml Glaskolben mit Rührer und Kurzwegabscheider werden 28,0 g Oligocarbonat 2, sowie 5,0 g THPE-Abmischung (Rohstoff B; entsprechend 1,5 Gew.-% THPE) eingewogen. Die Apparatur wird evakuiert und mit Stickstoff belüftet (jeweils dreimal). Die Mischung wird durch ein auf 290 °C vorgeheiztes Metallbad innerhalb von 10 Minuten unter Normaldruck aufgeschmolzen. Das Reaktionsgemisch wird für weitere 5 Minuten unter Normaldruck gerührt. Danach wird Vakuum angelegt bis der Druck in der Apparatur ca. 1,5 mbar beträgt. Das Reaktionsgemisch wird für 10 Minuten unter Rühren bei diesem Vakuum gehalten. Danach wird mit Stickstoff belüftet und die Polymerschmelze entnommen. Man erhält ein transparentes Polycarbonat. Die Lösungsviskosität des Produkts beträgt 1,213.

Eine Probe des auf diese Weise erhaltenen Polycarbonats wird in Dichlormethan gelöst. Dabei werden keine unlöslichen Bestandteile festgestellt.

### Versuchsaufbau für die Beispiele 3 und 4:

Das Schema des Versuchsaufbaus ist Figur 2 zu entnehmen.

Figur 2 zeigt ein Schema zur Herstellung von Siloxan-haltigen Blockcokondensaten nach der Aufteilung in mindestens zwei Teilmengenströme. Das Polycarbonat 1 bzw. das Oligocarbonat 3 (Rohstoff A) und ein Katalysator-Masterbatch enthaltend das 99,75 Gew.-% Polcarbonat 1 und 0,25 Gew.-% Tetraphenylphosphoniumphenolat (TPPP) werden über die gravimetrischen Zuführungen (24) und (25) auf den Doppelschneckenextruder (21) dosiert. Der Extruder (Typ ZSE 27 MAXX von Fa. Leistritz Extrusionstechnik GmbH, Nürnberg) ist ein gleichsinnig drehender Zweischneckenextruder mit Vakuumzonen zur Abtrennung der Brüden. Der Extruder besteht aus 11 Gehäuseteilen (a bis k) - siehe Figur 2. Im Gehäuseteil a erfolgt die Zugabe von Polycarbonat sowie Katalysatormasterbatch sowie im Gehäuse b und c das Aufschmelzen dieser Komponenten. Im Gehäuseteil d erfolgt die Zugabe desr flüssigen Siloxans (Rohstoff B). Die Gehäuseteile e und f dienen der Einmischung desr flüssigen Siloxans (Rohstoff B). Die Gehäuseteile g, h, i und j sind mit Entgasungsöffnungen versehen, um die Kondensationsprodukte zu entfernen. Das Gehäuse h ist der ersten und die Gehäuseteile i und j der zweiten Vakuumstufe zugeordnet. Das Vakuum in der ersten Vakuumstufe betrug zwischen 250 und 500 mbar Absolutdruck. Das Vakuum in der zweiten Vakuumstufe beträgt weniger als 1 mbar. Das Siloxan (Rohstoff B) wird in einem Tank (26) vorgelegt und über eine Dosierpumpe (27) auf den Extruder gegeben. Das Vakuum wird über 2 Vakuumpumpen (28) generiert. Die Brüden werden vom Extruder weggeführt und in 2 Kondensatoren aufgefangen (29). Die so entgaste Schmelze wird über eine Leitung vom Gehäuseteil k des Zweischneckenextruders auf einen Hochviskosreaktor (22) geführt.

Bei dem Hochviskosreaktor (22) handelt es sich um einen selbstreinigenden Apparat mit zwei gegenläufigen, horizontal und achsparallel angeordneten Rotoren. Der Aufbau ist in der europäischen Patentanmeldung EP460466A1beschrieben, siehe dort Fig. 7. Die verwendete Maschine hat einen Rotordurchmesser von 187 mm bei einer Länge von 924 mm. Der gesamte Innenraum des Reaktors hat ein Volumen von 44,6 Litern. Der Hochviskosreaktor ist ebenfalls an eine Vakuumpumpe (28) und an einen Kondensator (29) angeschlossen. Das am Hochviskosreaktor anliegende Vakuum beträgt 0,1 bis 5 mbar. Nach Abschluss der Reaktion wird das Blockcopolycarbonat über eine Austragsschnecke (23) abgeführt und anschließend granuliert (über Wasserbad (30) und Granulator (21).

### Beispiel 3 (Vergleichsbeispiel: Herstellung eines Siloxan-haltigen Blockcopolycarbonats):

Es wird die oben beschriebene Reaktorkombination aus Extruder und Hochviskosreaktor genutzt. Als Rohstoff wird das Polycarbonat 1 eingesetzt. Als Siloxan wird Rohstoff C, Siloxan 1, eingesetzt.

### Verfahrensparameter:

Polycarbonatdurchsatz: 6,00 kg/h
Siloxandurchsatz: 0,33 kg/h
Masterbatchdurchsatz: 0,67 kg/h
Gesamtdurchsatz: 7,0 kg/h
Drehzahl Extruder: 360 U/min
Gehäusetemperatur Extruder: 330 °C
Vakuum Extruder: 0,3 mbar absolut
Drehzahl HVR: 67 U/min
Gehäusetemperatur HVR: 340 °C
Vakuum HVR: <0,1 mbar absolut

Es wurde ein Blockcopolycarbonat mit einer Lösungsviskosität von 1,291 enthalten. Diese Lösungsviskosität ist auch die gewünschte Endlösungsviskosität.

### Beispiel 4 (erfindungsgemäß: Herstellung eines Siloxan-haltigen Blockcopolycarbonats):

Es wird die oben beschriebene Reaktorkombination aus Extruder und Hochviskosreaktor genutzt. Als Rohstoff wird das Oligocarbonat 2 eingesetzt. Als Siloxan wird die Rohstoff C, Siloxan 2, eingesetzt

### Verfahrensparameter:

Durchsatz: 7,0 kg/h
Polycarbonatz 6,67 kg/h
Siloxan 0,33 kg/h
Gesamtdurchsatz 7,0 kg/h
Drehzahl Extruder: 360 U/min
Gehäusetemperatur Extruder: 310 °C
Vakuum Extruder: 0,3 mbar absolut
Drehzahl HVR: 90 U/min
Gehäusetemperatur HVR: 320 °C
Vakuum HVR: <0,1 mbar absolut

Es wurde ein Blockcopolycarboat mit einer Lösungsviskosität von 1,297 enthalten. Diese Lösungsviskosität ist auch die gewünschte Endlösungsviskosität.

Aus den Beispielen 1 und 2 erkennt man, dass überraschenderweise nur die Umsetzung mit einem Oligocarbonat erhalten unmittelbar vor der Aufteilung in mindestens zwei Teilmengenströme zu einer guten Produktqualität führt. Demgegenüber ist ein Gelkörper-haltiges Produkt nicht wünschenswert, da dies in weiteren Verarbeitungsschritten, wie beispielsweise in einem Spritzgussverfahren, zu Problemen führen kann. Ferner konnte überraschenderweise gezeigt werden, dass aus dem Oligocarbonat mit relativ niedriger Molmasse innerhalb relativ kurzer Verfahrenszeiten die Herstellung eines modifizierten Polycarbonats möglich ist.

Die Beispiele 3 und 4 beschreiben die Umsetzung eines Polycarbonats bzw. eines Oligocarbonats in einem in einem zweiten Strang von Reaktoren nach der Aufteilung in mindestens zwei Teilmengenströme.

Überraschenderweise konnte durch Einsatz eines Oligocarbonats erhalten unmittelbar vor der Aufteilung in mindestens zwei Teilmengenströme die Verarbeitungstemperatur im Hochviskosreaktor deutlich gesenkt werden, wodurch die Energiekosten gesenkt werden. Außerdem werden bei niedrigeren Temperaturen schädigende Nebenreaktionen, die beispielsweise zur Vergilbung des erhaltenen Polycarbonats führen, unterdrückt.

Ferner überraschenderweise benötigt man bei Einsatz eines Oligocarbonats erhalten unmittelbar vor der Aufteilung in mindestens zwei Teilmengenströme keinen Katalysator, beispielsweise in Form einer alkalischen Natrium-Verbindung. Dies ist vorteilhaft, da dies die Verfahrenskosten senkt und alkalische Natriumverbindungen zu unerwünschten Nebenreaktionen führen können. Solche unerwünschten Nebenreaktionen sind beispielsweise das Entstehen von höheren Mengen an Fries-Verzweigungen, die zu einer höheren Schmelzviskosität und auch einer höheren Menge an Gelteilchen führen.

Außerdem wurde bei Einsatz eines Oligocarbonats erhalten unmittelbar vor der Aufteilung in mindestens zwei Teilmengenströme auch ohne Zusatz eines Katalysators ein Polycarbonat mit einer höheren Lösungsviskosität erhalten als bei Einsatz eines Polycarbonats mit höherer anfänglicher Lösungsviskosität sowie Katalysatorzusatz und höherer Temperatur (siehe Beispiel 3). Dies ist ebenfalls überraschend, da der Fachmann davon ausgegangen wäre, dass er bei höherer Temperatur und bei Einsatz eines Katalysators eine höhere Lösungsviskosität erreichen würde, insbesondere wenn er ein Polycarbonat mit höherer anfänglicher Lösungsviskosität einsetzt.

### Beispiele 5 bis 8

Bei den in Tabelle 1 aufgeführten Experimenten wurde ein Oligocarbonat auf Basis von Bisphenol A eingesetzt, welches einer kontinuierlich betriebenen Produktionsanlage zur Herstellung von Polycarbonaten nach dem Schmelzeumesterungsverfahren nach drei Flashstufen und einem ersten Scheibenreaktor entnommen wurde. Dieses Oligocarbonat ist als OPC-3 bezeichnet.

Das eingesetzte Oligocarbonat OPC-3 wies ein Molekulargewicht Mw von 11670 g/mol (ermittelt durch Gelpermeationschromatographie GPC unter Verwendung einer BPA-Polycarbonat-Eichung) auf. Die Lösungsviskosität von betrug 1,151. Der Gehalt an phenolischen OH-Endgruppen (bestimmt mittels IR-Spektroskopie) betrug 2000 ppm.

Bei dem verwendeten Additiv JONCRYL ADR 4468 HP handelt es sich um ein Glycidylmethacrylat-haltiges Styrol-Acrylat-Polymer. Es ist kommerziell bei der BASF SE, Ludwigshafen, erhältlich.

Das Oligocarbonat OPC-3 wurde mit den in Tabelle 1 angegebenen Mengen von JONCRYL ADR 4468 HP bei 300°C und bei 330°C jeweils 10 und 20 Minuten Verweilzeit auf einem DSM Midi 2000 Doppelschnecken Labor-Miniextruder bei 100 Umdrehungen pro Minute gemischt und abschließend zur Isolierung extrudiert. Die erhaltenen Stränge wurden hinsichtlich ihres Molekulargewichts mittels GPC untersucht.

**Tabelle 1**

| **Beispiel** | | **5** | **6** | **7** | **8** |
|---|---|---|---|---|---|
| Oligocarbonat OPC-3 | Gew.-% | 100 | 99,7 | 99,5 | 99 |
| JONCRYL ADR 4468 HP | Gew.-% | | 0,3 | 0,5 | 1 |
| | | | | | |
| 300°C / 10min | | | | | |
| Mw | | 9974 | 13904 | 19920 | 31870 |
| 300°C / 20min | | | | | |
| Mw | | 9558 | 13330 | 19260 | 31870 |
| 330°C / 10min | | | | | |
| Mw | | 9349 | 9855 | 14390 | 39940 |
| 330°C / 20min | | | | | |
| Mw | | 9699 | 9663 | 14440 | 30380 |

Man erkennt am Vergleich der Beispiele 6 bis 8 mit dem Beispiel 5 (Vergleichsbeispiel, kein Zusatz von JONCRYL ADR 4468 HP), dass durch Zugabe des Additivs JONCRYL ADR 4468 HP eine Erhöhung des Molekulargewichts Lösungsviskosität erreicht wurde.

### Beispiele 9 bis 12

**Tabelle 2**

| Die Rezepturen der Tabelle 2 wurden im Vergleich zu den Beispielen aus Tabelle 1 teilweise mit unterschiedlichen Parametern gefahren: die Verweilzeit betrug jeweils 20min. | | | | | |
|---|---|---|---|---|---|
| **Rezeptur** | | **9** | **10** | **11** | **12** |
| Oligocarbonat OPC-3 | Gew.-% | 100 | 98 | 96 | 94 |
| JONCRYL ADR 4468 HP | Gew.-% | | 2 | 4 | 6 |
| | | | | | |
| 300°C / 20min | | | | | |
| Mw | | 9558 | 57420 | 64700 | 71840 |
| 320°C / 20min | | | | | |
| Mw | | | 52010 | 64200 | 71260 |

Mit höheren Mengen des Additivs JONCRYL ADR 4468 HP wurden bei gleichen Verweilzeiten höhere Molekulargewichte erhalten. Eine Temperaturerhöhung von 300°C auf 320°C führt offensichtlich zu keiner signifikanten Erhöhung der Molekulargewichte.

## Patentansprüche

**1.** Schmelzeumesterungsverfahren zur kontinuierlichen gleichzeitigen Herstellung eines ersten Polycarbonats und mindestens eines zweiten Polycarbonats, wobei das Schmelzeumesterungsverfahren folgende Schritte umfasst:
(I) Bereitstellung eines Mengenstroms eines Oligocarbonats,
(II) Aufteilung des Mengenstroms des Oligocarbonats in mindestens zwei Teilmengenströme des Oligocarbonats,
(III) Leitung eines ersten Teilmengenstroms der mindestens zwei Teilmengenströme des Oligocarbonats auf einen ersten Strang von Reaktoren von mindestens zwei zueinander parallel geschalteten Strängen von Reaktoren eines zweiten Anlagenteils und Leitung eines zweiten Teilmengenstroms der mindestens zwei Teilmengenströme des Oligocarbonats auf einen zweiten Strang von Reaktoren von mindestens zwei zueinander parallel geschalteten Strängen von Reaktoren eines zweiten Anlagenteils,
(IV) Umsetzung des Oligocarbonats zu einem ersten Polycarbonat in einem ersten Strang von Reaktoren der mindestens zwei zueinander parallelen Stränge von Reaktoren und Umsetzung des Oligocarbonats zu einem zweiten Polycarbonat in einem zweiten Strang von Reaktoren der mindestens zwei zueinander parallelen Stränge von Reaktoren, wobei
in den parallel geschalteten Strängen von Reaktoren gleichzeitig jeweils verschiedenartige Polycarbonate hergestellt werden, wobei bereits bei der Bereitstellung des Mengenstroms des Oligocarbonats bis zur Aufteilung in Teilmengenströme- mindestens ein Katalysators zugegeben wird und nach der Aufteilung in Teilmengenströme in mindestens einem der Teilmengenströme ein oder mehrere Co-Reaktanden und/oder ein oder mehrere Katalysatoren hinzugefügt werden, wobei die Lösungsviskosität des jeweiligen Polycarbonats nach Schritt (IV) größer ist als die Lösungsviskosität des jeweiligen Polycarbonats in den vorhergehenden Verfahrensschritten.

**2.** Schmelzeumesterungsverfahren nach Anspruch 1, wobei die Aufteilung des Mengenstroms des Oligocarbonats in mindestens zwei Teilmengenströme erfolgt, wenn das Oligocarbonat eine Lösungsviskosität von 1,04 bis 1,18 aufweist.

**3.** Schmelzeumesterungsverfahren nach Anspruch 1, wobei die Aufteilung des Mengenstroms des Oligocarbonats in mindestens zwei Teilmengenströme erfolgt, wenn das Oligocarbonat eine Lösungsviskosität von 1,05 bis 1,12, bevorzugt 1,06 bis 1,10 aufweist.

**3.** Schmelzeumesterungsverfahren nach Anspruch 1, wobei die Aufteilung des Mengenstroms des Oligocarbonats in mindestens zwei Teilmengenströme erfolgt, wenn das Oligocarbonat eine Lösungsviskosität von 1,13 bis 1,18, bevorzugt von 1,14 bis 1,16 aufweist.

**4.** Schmelzeumesterungsverfahren nach einem der vorhergehenden Ansprüche, wobei an keiner Stelle nach der Aufteilung in Teilmengenströme ein kettenverkürzendes Agens zugefügt wird.

**5.** Schmelzeumesterungsverfahren nach einem der vorhergehenden Ansprüche, wobei an keiner Stelle bis zur Aufteilung in Teilmengenströme ein kettenverkürzendes Agens zugefügt wird.

**6.** Schmelzeumesterungsverfahren nach Anspruch 1, wobei in dem Falle, dass in mehrere der mindestens zwei Teilmengenströme nach der Aufteilung in Teilmengenströme ein oder mehrere Co-Reaktanden und/oder ein oder mehrere Katalysatoren hinzugefügt werden, mindestens einer der Co-Reaktanden und/oder mindestens einer der Katalysatoren in einem der Teilmengenströmen unterschiedlich ist von den Co-Reaktanden und/oder Katalysatoren in einem anderen Teilmengenstrom.

**7.** Schmelzeumesterungsverfahren nach Anspruch 1, wobei in dem Falle, dass in den mindestens zwei Strängen von Reaktoren nach der Aufteilung in Teilmengenströme unterschiedliche Reaktionsbedingungen herrschen.

**10.** Schmelzeumesterungsverfahren nach Anspruch 1, wobei in dem Falle, dass in den mindestens zwei Strängen von Reaktoren nach der Aufteilung in Teilmengenströme hinsichtlich der Art und/oder der Anzahl der Reaktoren unterscheiden.

**11.** Schmelzeumesterungsverfahren nach Anspruch 1, wobei der Durchsatz des Teilmengenstroms in einem ersten Strang von Reaktoren der mindestens zwei zueinander parallelen Stränge von Reaktoren nach der Aufteilung in Teilmengenströme größer ist als der Durchsatz des Teilmengenstroms in einem zweiten oder weiteren Strang von Reaktoren der mindestens zwei zueinander parallelen Stränge von Reaktoren nach der Aufteilung in Teilmengenströme.

**12.** Schmelzeumesterungsverfahren nach Anspruch 1, wobei im zweiten Strang von Reaktoren nach der Aufteilung in Teilmengenströme oder mehrere Inhibitoren zugegeben werden, bevorzugt ausgewählt aus ein oder mehreren der Gruppe umfassend einen Sulfonsäureester oder eine Mischung verschiedener Sulfonsäureester.

**13.** Schmelzeumesterungsverfahren nach Anspruch 1, wobei in einem ersten Strang von Reaktoren der mindestens zwei zueinander parallelen Stränge von Reaktoren nach der Aufteilung in Teilmengenströme ein unverzweigtes Polycarbonat-Homopolymer hergestellt wird, das nur aus einem einzigen Diarylcarbonat und nur einem einziges Bisphenol aufgebaut ist.

**14.** Schmelzeumesterungsverfahren nach Anspruch 1, wobei in einem zweiten Strang von Reaktoren der mindestens zwei zueinander parallelen Stränge von Reaktoren nach der Aufteilung in Teilmengenströme ein verzweigtes Polycarbonat oder ein Copolycarbonat hergestellt wird.

**15.** Schmelzeumesterungsverfahren nach einem der vorhergehenden Ansprüche, **dadurch gekennzeichnet, dass** mindestens einem der Teilmengenströme nach der Aufteilung des Mengenstroms in Teilmengenströme, aber vor Erreichen einer gewünschten Endlösungsviskosität des Polycarbonats, Blendpartner und/oder sensible Zuschlagstoffe zugeben werden.

**16.** Schmelzeumesterungsverfahren nach einem der vorhergehenden Ansprüche, **dadurch gekennzeichnet, dass** einem ersten Teilmengenstrom der mindestens zwei Teilmengenströme nach der Aufteilung des Mengenstroms in Teilmengenströme, aber vor Erreichen der gewünschten Endlösungsviskosität, ein oder mehrere der Co-Reaktanden zugefügt werden, und dieser erste Teilmengenstrom wieder mit einem anderen, zweiten Teilmengenstrom der mindestens zwei Teilmengenströme vereinigt wird, und zwar bevor weder das Polycarbonat im ersten Teilmengenstrom der mindestens zwei Teilmengenströme noch das Polycarbonat im zweiten Teilmengenstrom der mindestens zwei Teilmengenströme die gewünschte Lösungsviskosität erreicht hat.

**17.** Schmelzeumesterungsverfahren zur kontinuierlichen gleichzeitigen Herstellung eines ersten Polycarbonats und mindestens eines zweiten Polycarbonats nach dem Schmelzeumesterungsverfahren, wobei das Schmelzeumesterungsverfahren folgende Schritte umfasst:
(I) Bereitstellung eines Mengenstroms eines Oligocarbonats, in einem ersten Anlagenteil,
(II) Aufteilung des Mengenstroms des Oligocarbonats in mindestens zwei Teilmengenströme des Oligocarbonats,
(III) Leitung eines ersten Teilmengenstroms der mindestens zwei Teilmengenströme des Oligocarbonats auf einen ersten Strang von Reaktoren von mindestens zwei zueinander parallel geschalteten Strängen von Reaktoren eines zweiten Anlagenteils und Leitung eines zweiten Teilmengenstroms der mindestens zwei Teilmengenströme des Oligocarbonats auf einen zweiten Strang von Reaktoren von mindestens zwei zueinander parallel geschalteten Strängen von Reaktoren eines zweiten Anlagenteils,
(IV) Umsetzung des Oligocarbonats zu einem ersten Polycarbonat in einem ersten Strang von Reaktoren der mindestens zwei zueinander parallelen Stränge von Reaktoren des zweiten Anlagenteils und Umsetzung des Oligocarbonats zu einem zweiten Polycarbonat in einem zweiten Strang von Reaktoren der mindestens zwei zueinander parallelen Stränge von Reaktoren des zweiten Anlagenteils,
wobei
in den parallel geschalteten Strängen von Reaktoren des zweiten Anlagenteils gleichzeitig jeweils verschiedenartige Polycarbonate hergestellt werden, wobei bereits bei der Bereitstellung des Mengenstroms des Oligocarbonats im ersten Anlagenteil mindestens ein Katalysator zugegeben wird und in mindestens einem der Teilmengenströme im zweiten Anlagenteil ein oder mehrere Co-Reaktanden und/oder ein oder mehrere Katalysatoren hinzugefügt werden, wobei die Lösungsviskosität des jeweiligen Polycarbonats nach Schritt (IV) größer ist als die Lösungsviskosität des jeweiligen Polycarbonats in den vorhergehenden Verfahrensschritten.

**18.** Computergesteuertes Mess- und Regelsystem zur Ausführung und/oder Steuerung eines Schmelzeumesterungsverfahren nach einem der vorhergehenden Ansprüche, wobei das computergesteuerte Mess- und Regelsystem einen Speicher mit Programmanweisungen eines Computerprogramms und mindestens einen Prozessor ausgebildet zum Ausführen von Programmanweisungen aus dem mindestens einen Speicher aufweist.
